(19) Europäisches Patentamt

European Patent Office

Office européen des brevets

(11) **EP 1 337 404 B1**

(12) **FASCICULE DE BREVET EUROPEEN**

(45) Date de publication et mention
de la délivrance du brevet:
**03.11.2010 Bulletin 2010/44**

(21) Numéro de dépôt: **01996469.1**

(22) Date de dépôt: **19.11.2001**

(51) Int Cl.:
**B60C 11/24** *(2006.01)*

(86) Numéro de dépôt international:
**PCT/FR2001/003622**

(87) Numéro de publication internationale:
**WO 2002/040296 (23.05.2002 Gazette 2002/21)**

(54) **PROCEDE ET DISPOSITIF DETECTEUR D'USURE DES PNEUMATIQUES**

VERFAHREN UND VORRICHTUNG ZUR BESTIMMUNG DES VERSCHLEISSZUSTANDES EINES REIFENS

METHOD AND DEVICE FOR DETECTING TYRE WEAR

(84) Etats contractants désignés:
**BE DE FR GB IT**

(30) Priorité: **20.11.2000 FR 0015243**

(43) Date de publication de la demande:
**27.08.2003 Bulletin 2003/35**

(73) Titulaire: **Dufournier Technologies SAS
63800 Cournon d'Auvergne (FR)**

(72) Inventeur: **DUFOURNIER, Arnaud
F-63000 Clermont-Ferrand (FR)**

(56) Documents cités:
**EP-A- 0 890 458          WO-A-99/38715
DE-A- 19 649 506      DE-A- 19 745 734
GB-A- 2 286 161         US-A- 3 578 055
US-A- 3 929 179**

• **PATENT ABSTRACTS OF JAPAN vol. 1999, no. 11, 30 septembre 1999 (1999-09-30) & JP 11 170819 A (YAZAKI CORP), 29 juin 1999 (1999-06-29)**

**Description**

Secteur technique de l'invention :

La présente invention concerne le secteur technique des véhicules automobiles et plus spécialement des dispositifs et procédés pour améliorer leur contrôle, et tout particulièrement le secteur technique de l'étude de tels dispositifs et procédés pour contrôler leurs pneumatiques et notamment le degré d'usure de ceux-ci.

On comprendra aussi aisément que l'usure peut être provoquée par une autre phénomène, par exemple une attaque chimique du matériau constitutif de la zone d'usure, en employant par exemple dans un tel cas l'option magnétique qui sera décrite.

Par simplicité, on entendra dans toute la présente demande, y compris les dessins et les revendications, par « pneumatique » non seulement les pneumatiques et plus généralement toutes les bandes de roulement analogues, et par « usure » on entendra aussi bien l'usure de pneumatiques ou de bandes de roulement par rotation sur une surface de roulement, y compris sur une machine d'essai dite « rouleuse », que l'usure par exemple par attaque chimique et toutes les options et variantes qui seront directement accessibles à l'homme de métier par simple analogie, et qu'il est bien évidemment impossible de rappeler entièrement à chaque mention.

Lorsque cela sera nécessaire et / ou possible, la présente demande comprendra des vocables tels que surfaces (ou zones, etc.....) d'usure, mais sauf mention spécifique toute autre vocable plus spécifique comprendra toute les options et versions et adaptations ci-dessus, y compris dans les revendications.

Art antérieur :

On connaît certains dispositifs de marquage intégrés à la bande de roulement des pneumatiques, et qui soit disparaissent soit apparaissent lorsque l'usure de la bande de roulement devient rédhibitoire.

Un tel dispositif est connu du document US-A-3 929 179.

De tels systèmes ne peuvent être consultés qu'à l'arrêt, et de manière manuelle ou visuelle, roue après roue. Sauf chez les conducteurs extrêmement consciencieux, ils ne présentent pas d'intérêt préventif.

Par ailleurs, pour les flottes importantes de véhicules, par exemple les véhicules d'intervention d'Electricité de France, La Poste ou analogues, ou les flottes de véhicules de location, ou les poids lourds, on ne connaît pas de système permettant de contrôler rapidement et de manière fiable tous les pneumatiques de la flotte, ni de jouer un rôle préventif, et donc de permettre un bon « suivi » de la flotte ou un auto-diagnostic embarqué à destination du conducteur ou du garagiste et/ou à distance pour l'entité en charge de l'entretien du véhicule.

Il existe donc un besoin important et reconnu pour un système qui permettrait de contrôler facilement, très rapidement, éventuellement en continu, le degré d'usure de chaque pneumatique de chaque véhicule d'une flotte, ou de poids lourds, ou de jouer un rôle préventif pour les conducteurs particuliers.

Outre que l'on réduirait ainsi les risques d'accidents graves, un auto diagnostic limiterait fortement le temps d'immobilisation des véhicules d'une flotte et permettrait d'optimiser et de planifier le changement de leurs pneumatiques, ce qui représenterait un avantage considérable, voire capital pour les poids lourds.

Objectif :

L'objectif du dispositif et du procédé selon l'invention consiste à détecter le ou les pneumatiques (ou bande de roulement) ayant atteint la limite d'usure, et informer le conducteur et les systèmes et dispositifs de sécurité embarqués (antipatinage, antiblocage de frein ABS™, contrôle de trajectoire) afin qu'ils prennent les décisions appropriées.

Cette information peut également être fournie à l'ordinateur de bord dans le cadre du diagnostic maintenance ou transmis à des dispositifs extérieurs au véhicule (poste de péage, station à poste fixe, station d'entretien, centrale de gestion de flotte, et analogues).

Le système doit naturellement rester le plus simple et le plus économique possible.

Une difficulté de cette détection est qu'elle est de type lent, c'est-à-dire que le phénomène à mesurer évolue généralement très lentement (sauf incident) ce qui a pu décourager les chercheurs de progresser dans cette voie.

Une autre difficulté est que le bruit de fond peut être trop important. Ceci aussi a pu dissuader les chercheurs. A cet égard, on notera que la zone de détection ne représente pas forcément tout le domaine d'utilisation (ex. : détection activée entre 40 et 60 km/h, h - plage de vitesse dans laquelle on passe systématiquement au moins deux fois par roulage et qui suffit donc à la détection - avec verrouillage en dehors de cette plage selon les applications).

Domaine d'application:

Tous véhicules à moteur ou non équipés de « pneumatiques » au sens large défini ci-dessus de bandes de roulement.

Résumé de l'invention :

L'usure des pneumatiques est un phénomène inéluctable, mais éminemment variable en fonction de l'usage (conduite, circuit routier, réglages du véhicule).

Lors d'incident, modification incidentelle des géométries de suspension, blocage des roues au freinage, voile d'un disque de frein, ... l'usure peut être très fortement accélérée.

D'autre part, l'usure excessive des pneumatiques peut avoir des conséquences graves sur le comportement du véhicule: aquaplaning, endommagement de la structure du pneumatique entraînant sa déchéance, modification du comportement routier. En outre la limite d'usure répond à une norme et une obligation légale et est donc passible d'entraîner une amende en cas de non respect ou la mise ne cause de la responsabilité du conducteur en cas d'accident.

En synthèse, l'usure des pneumatiques est un phénomène inéluctable et à l'évolution imprévisible, mais ayant des conséquences importantes en terme de sécurité.

**Le dispositif et le procédé** proposés selon l'invention sont décrits dans les revendications 1 et 9, et permettent de détecter de telles déchéances avancées du pneumatique en incorporant dans celui-ci des témoins d'usure chargés d'émettre un signal acoustique caractéristique lorsque le pneumatique est usé jusqu'auxdits témoins.

Ce dispositif ou ce procédé est complété par un dispositif électronique, qui détecte l'apparition du signal acoustique caractéristique de la limite d'usure admissible.

En règle générale on pourra utiliser deux principes de détection :

■ Les témoins s'usent et disparaissent totalement lorsque le niveau d'usure est atteint. On détecte alors leur absence par l'absence de leur signature caractéristique.

■ Les témoins sont implantés en profondeur de façon à apparaître lorsque le niveau d'usure est atteint. On détecte alors leur apparition par l'apparition de leur signature caractéristique.

PROCEDE

Le procédé selon l'invention est décrit dans les revendications 1 à 8.

Description détaillée de l'invention :

Principe général :

Selon un mode de réalisation préféré, on emploiera des témoins de type « acoustique » générant un signal acoustique ».

A noter que de tels témoins acoustiques peuvent être, soit des inserts ou autres pièces, soit des formes géométriques ou sculptures adaptées pour, soit générer un signal acoustique spécifique au contact de la surface de contact, lequel signal disparaît lorsque ladite forme ou sculpture est usée au delà d'un seuil prédéterminé, soit générer un signal acoustique par leur contact avec la surface de contact lorsque, au delà d'un seuil d'usure prédéterminé du pneumatique, elle sont suffisamment mises à jour.

Selon un mode de réalisation non limitatif, les témoins acoustiques sont insérés dans la masse et / ou dans un sillon, rainure etc... (« rib ») de la « bande de roulement » du « pneumatique » (ou de toute « zone ou surface d'usure ») à une profondeur adaptée de façon à entrer en contact avec le sol (ou toute « surface de contact ») lorsque la limite d'usure est atteinte.

Selon encore un mode de réalisation, lorsque le pneumatique est usé jusqu'aux témoins, ceux-ci martèlent le sol lors du roulage et génèrent donc un signal acoustique.

Ce signal acoustique dépend du nombre de témoins entrant en contact avec le sol, mais aussi de leur position, de la vitesse du véhicule et des caractéristiques acoustiques des témoins insérés dans le pneumatique.

Ce signal est composé d'une fréquence de base (sélectionnée par l'homme de métier pour être spécifique et discriminable, comme expliqué plus haut) correspondant à la fréquence acoustique fa propre au témoin inséré dans le pneu et apparaît à chaque fois qu'un témoin entre en contact avec le sol.

L'homme de métier comprendra que la « fréquence propre » du témoin à prendre en considération est la fréquence du témoin lorsqu'il est en position dans le « pneumatique ».

Le signal fa est de plus modulé par une fonction ft qui dépend du nombre de témoins, de leur disposition ou « implantation », mais aussi de la vitesse de rotation de la roue.

Cette fonction ft est une fonction harmonique du tour de roue.

Cette fréquence sera également prédéterminée pour être spécifique et discriminable et / ou pour apporter des informations complémentaires.

On pourra notamment, comme précisé ci-dessous, combiner plusieurs séries de témoins positionnés transversalement par rapport à la « bande de roulement », avec au moins un témoin par azimut de roue, chaque série correspondant à des azimuts de roue au moins partiellement différents.

On obtiendra ainsi une caractéristique ft1, ft2, ft3 pour différentes séries de témoins, la série 1 correspondant aux azimuts a, b, c, d, la série 2 à des azimuts a (ou différent de a), e, f, g, h, i, etc....

On rappelle que l'azimut de roue est un angle qui repère la position angulaire alpha d'un point fixe d'une roue par rapport à une référence donnée. La référence 0° peut être par exemple en coïncidence avec un repère roue tel que la valve, ou pneu tel que le DOT qui est un repère bien connu marqué sur le pneu. Les autres azimuts sont déterminés par rotation autour de l'axe de la roue en partant de ce repère initial.

Connaissant la géométrie d'implantation des témoins dans le pneumatique, et la vitesse de rotation de la roue (soit à partir de capteurs de mesure de vitesse roue qui peuvent être déjà présents sur le véhicule comme pour l'ABS™, soit à partir de la mesure de la vitesse du véhicule), la fonction harmonique ft peut être aisément construite.

La fonction fa est également connue par conception et intégration des témoins dans le pneumatique.

Modulation d'amplitude

fa : signal modulé

ft : signal modulant

On pourra voir en effet dans ce qui précède une analogie avec une modulation d'amplitude où fa serait en quelque sorte le signal modulé et ft le signal modulant.

Selon un mode de réalisation non limitatif, le procédé est **caractérisé en ce que**, dans le cas d'une détection multi-niveaux, on pourra utiliser pour les différents niveaux des témoins disposant d'une signature acoustique fa propre à chaque niveau et / ou on pourra utiliser une implantation particulière des témoins correspondant à chaque niveau de détection (typage de ft pour chaque niveau d'usure).

TRAITEMENT

Selon un mode de réalisation non limitatif, le procédé comporte un traitement de signal en vue de l'extraction globale A) du signal utile S(t) et qui comporte les étapes suivantes :

B) extraction du signal témoin et / ou

C) extraction du signal d'implantation, et

éventuellement des étapes d'améliorations complémentaires comme
l'identification de la roue incriminée, et / ou
l'optimisation du volume et du temps de calcul, et / ou
un traitement de discrimination par rapport aux autres véhicules

**Evaluation de l'information « usure instantanée ».**

On trouvera ci-dessous la description détaillée de modes non limitatifs de tels traitements. Tout homme de métier du domaine des traitements de signaux sera à même de comprendre ce qui suit et d'en déduire des variantes, adaptations, améliorations, etc.... immédiatement accessibles, qui font également partie de l'invention.

**1 Extraction du signal utile S(t) :**

Afin d'extraire le signal utile, on effectue les traitements suivants à partir du signal de base :

L'extraction A) du signal utile comporte deux phases distinctes B) et / ou C) qu'on pourra enchaîner dans un sens ou dans l'autre notamment pour réduire au plus tôt le volume de données à traiter.

On pourra également n'effectuer qu'une seule des deux phases B) et / ou C) afin de réduire le nombre d'opération à effectuer et donc simplifier le traitement. Cependant dans le mode général, on effectuera les deux étapes afin d'obtenir l'extraction la plus performante.

### Extraction du signal témoin

On effectuera un filtrage numérique ou analogique visant à ne garder que les signaux correspondant à la (aux) fréquence (s) propre (s) du signal du témoin inséré dans le pneu. En mode acoustique, on parlera de la fréquence acoustique propre du témoin inséré dans le pneu.

Dans le cas où on dispose de plusieurs témoins correspondants chacun à un niveau de détection d'usure, on effectuera pour chaque type de témoin cette dernière opération calée à chaque fois sur la (les) fréquence (s) propre (s) du signal du témoin considéré inséré dans le pneu. On appellera alors le signal extrait $S_i(t)$

On pourra ici faire une analogie avec une démodulation du signal de base par le signal notamment composé d'harmoniques du tour de roue correspondant à l'implantation des capteurs.

Cette étape utilisée en premier permet de réduire considérablement le volume de données à traiter par la suite.

### Extraction du signal d'implantation

Le schéma d'implantation des témoins dans le pneumatique induit du fait de la rotation de la roue un signal "modulant" harmonique du tour de roue.

On utilise donc cette propriété pour extraire du signal de base les signaux apparaissant à des fréquences harmoniques du tour de roue correspondant à l'implantation des témoins qu'on cherche à détecter. On appellera $F_i(t)$ le signal modulant correspondant à une roue et à un niveau d'usure, c'est à dire à une implantation.

On pourra ici faire une analogie avec une démodulation du signal de base par le signal notamment composé d'harmoniques du tour de roue correspondant à l'implantation des capteurs.

Cette "démodulation" pourra dans un mode particulièrement intéressant être effectué à partir d'une corrélation entre le signal de base et le signal "modulant". Ce signal modulant étant successivement chacun des signaux $F_i(t)$ correspondant à une roue (ou dans une variante simplificatrice à une partie ou l'ensemble des roues) et à un niveau d'usure à détecter et correspondant à une implantation. On pourra prendre par exemple pour la constitution des ces signaux modulant $F_i(t)$ les signaux fournis par les capteurs vitesse roue de l'ABS qui seront alors modifiés en fonction des différentes implantations correspondant chacune à un niveau d'usure.

Dans le cas où on ne disposerait pas de l'information ABS ou d'une information vitesse roue individuelle, on pourra prendre comme signal d'information vitesse afin de construire l'"information implantation" et avant de la corréler avec le signal de base, l'information vitesse véhicule présente aujourd'hui sur la quasi totalité des véhicules.

Dans le cas où on dispose de plusieurs implantations correspondants chacune à un niveau de détection d'usure, on effectuera pour chaque implantation cette dernière opération calée à chaque fois sur le signal "modulant" correspondant à chaque implantation. Le résultat sera appelé $S_i(t)$

On pourra, pour ces deux étapes, parler d'une sorte de démodulation d'amplitude à la fréquence du tour de roue ou à une fréquence multiple du tour de roue, le signal modulé ayant pour fréquence la fréquence de résonance acoustique du témoin inséré dans le pneu.

Toutes ces options et variantes pourront être, comme le comprendra l'homme de métier, combinées entre elles de manières diverses, en fonction des applications.

### Améliorations complémentaires éventuelles et éventuellement en combinaisons diverses ):

### Identification de la roue incriminée :

En virage ou du fait d'un couple différent sur les essieux et même sur les roues, on peut considérer que chaque roue a sa vitesse propre. Ainsi, sur un temps suffisant la détermination de la roue est possible par un suivi de la phase du signal et une comparaison par rapport à chacune des vitesses roues.

On pourra donc comparer successivement la phase du signal de base avec des signaux représentatifs de la vitesse de chacune des roues (on prendra dans un exemple tout à fait préféré pour ces derniers signaux les signaux de vitesse roue fournis par les capteurs ABS™).

On pourra alors en déduire la ou les roue (s) ayant atteint le niveau d'usure.

Dans un mode de réalisation intéressant, on pourra par exemple utiliser les techniques classiques de boucle à verrouillage de phase numérique ou analogique.

### Discrimination par rapport aux autres véhicules :

Les véhicules ne roulant généralement pas strictement à la même vitesse et en particulier sur un temps long, on effectue la mesure sur un temps suffisamment long (quelques secondes à quelques minutes) pour éviter une confusion avec un véhicule identique qui roulerait à côté.

Cette approche peut bien sûr être renforcée par une analyse de phase telle que celle évoquée précédemment dans la détection de la roue incriminée afin de distinguer les signaux provenant de ses propres roues de celles des autres véhicules...

### Optimisation du volume et du temps de calcul :

On peut pour réduire de façon considérable le volume de calcul à effectuer dans la phase dite d'extraction implantation en utilisant notamment la transformation d'Hadamard pour calculer la corrélation entre le signal de base et le signal d'implantation. Cette approche élimine les stockages des données et les opérations de multiplication ou addition trop complexes généralement, notamment pour les microcontrôleurs et en général pour tous les calculateurs coûteuses en temps de calcul.

Dans un mode préféré permettant de simplifier et d'alléger encore l'extraction implantation, la transformation d'Hadamard sera appliquée au signal de base en quadrature de phase (traitement appliqué uniquement au module et élimination de la phase).

Selon encore une possibilité, une fois la détection confirmée, on peut basculer en mode analyse de phase (économie de temps CPU), car on sait qu'au moins une des roues est usée, et l'on cherche alors à déterminer laquelle ou lesquelles sont usées par intercorrélation entre le signal acoustique et la roue scrutée (harmoniques de la roue). Ce basculement pouvant prendre fin par exemple après la coupure du contact du véhicule avec donc un retour en mode détection jusqu'à reconfirmation de la détection et rebasculement en mode analyse de phase etc...

### *Discrimination de zones d'extraction :*

On remarquera également ici que l'extraction peut n'être effectuée uniquement que dans des domaines favorables à la mesure à condition que l'on se trouve suffisamment fréquemment dans ces domaines.

En effet, l'usure d'un pneumatique est un phénomène qui se développe lentement et il est donc sans inconvénient de n'opérer que dans des conditions de détection favorables, à la seule condition que lesdites conditions soient choisies pour que le « véhicule » ait l'occasion de les « traverser » à des intervalles de temps suffisamment courts pour ne pas permettre, entre deux zones de détection favorables, une évolution dangereuse de l'usure du pneumatique ;

-    selon un mode de réalisation <u>tout à fait préféré</u> de l'invention, on effectuera donc la détection d'usure dans des zones d'environnement favorables, c'est-à-dire dans des zones où les récepteurs et l'électronique ne seront pas perturbés par des phénomènes engendrant des bruits parasites encombrant, brouillant ou même saturant le système, tels que vitesse dépassant un certain seuil (au delà, bruits aérodynamiques trop élevés), pluie (en cas de pluie, bruits parasites très importants par les projections d'eau sur la carrosserie, le châssis, le récepteur, etc....), présence de gravillons (même conséquence), et autres situations qui apparaîtront facilement à l'homme de métier.

Dans une plage « favorable » dont les paramètres sont prédéterminés et mémorisés (et éventuellement réglables par le fabricant ou le concessionnaire automobile en fonction des pays d'emploi du véhicule), le procédé et le dispositif selon l'invention fonctionnent et détectent l'usure.

Dans une plage « non favorable » dont les paramètres sont prédéterminés et mémorisés (et éventuellement réglables par le fabricant ou le concessionnaire automobile en fonction des pays d'emploi du véhicule), le procédé et le dispositif selon l'invention restent en « veille » c'est-à-dire qu'ils ne prennent pas en compte les données reçues.

Dès le retour dans une plage favorable, le procédé et le dispositif selon l'invention repassent en mode actif et considèrent à nouveau les données comme utilisables et le détecteur est à nouveau susceptible de changer d'état de détection.

On pourra par exemple retenir une plage de vitesse favorable, et / ou une durée longue de quelques secondes à quelques minutes.

Par exemple : plage de vitesse 20-60 km/h et détection au bout d'une minute. Ainsi, à chaque démarrage, ou zone de ralentissement (péage, station service, conduite en ville etc....) la détection sera effectuée ; par contre, sur autoroute (entre les ralentissements ou arrêts) le système se mettra en veille (vitesse, par exemple de 130 km/h donc bruits aérodynamiques trop élevés). Même sur un très long trajet sur autoroute, est évident que l'obligation de stopper ou ralentir sera imposée au conducteur à des intervalles de temps suffisamment courts pour que la détection après une plage « défavorable » se produise bien avant une dégradation importante du pneumatique.

Le domaine de scrutation peut aussi correspondre par exemple à une période dont le début est défini par le démarrage du véhicule.

On pourra également, dans cet ordre d'idée, accélérer la durée de détection si la détection était déjà positive dans le trajet précédent.

## Comparaison - recalage spatial

Selon un mode de réalisation tout à fait intéressant, le procédé selon l'invention comporte une étape de « comparaison - recalage spatial » entre une roue avant et une roue arrière par exemple durant le calcul du facteur C (facteur de comparaison de la roue sous test à une roue de référence (ou normalisation du signal)).

Le but de cette étape optionnelle mais extrêmement importante est d'effectuer une comparaison sur les deux roues dite « iso-sol » c'est-à-dire que le coefficient C incorporant le recalage spatial (cf. ci-dessous) permet de s'affranchir avec précision des inégalités du sol, telles que bosse, rainure, etc....

L'utilisation de cette comparaison est basée sur la constatation que le train avant et le train arrière ne s'usent pas à la même vitesse et n'atteignent généralement pas le niveau d'usure en même temps.

Cette comparaison peut permettre en particulier d'accroître la qualité de détection de la première des deux roues comparées qui atteint le niveau d'usure recherché.

Ce point du procédé est une caractéristique de mise en oeuvre qui peut être importante, afin d'en obtenir la meilleure efficacité, c'est-à-dire que cette étape n'est pas absolument obligatoire, mais sera dans de nombreux cas une condition pour le fonctionnement du dispositif en toutes conditions, notamment sol dégradé.

Il est également important (en complément du recalage spatial) de noter que, selon un mode de réalisation préféré, on prend en compte des roues situées de préférence du même côté du véhicule.

Par exemple :

Dans le cas d'une roue avant sous test comparée à une roue arrière, la fonction sera :

$$C(t) = Si(t) - Sj(t+\Delta t)$$

**Si** correspond à la roue avant

**Sj** correspond à la roue arrière

e empattement (ou l'écart entre les deux roues considérées).

$$\Delta t = e/V$$

avec **V** = vitesse d'avancement du véhicule

**V** étant par exemple calculé à partir de la vitesse moyenne des roues non motrices ou de la vitesse moyenne de l'ensemble des roues.

Dans le cas d'une comparaison à un ensemble de roues, on recalera spatialement chacune des roues avant de calculer le critère moyen Sj des roues de comparaison.

Le calcul de la fonction Di sera alors le suivant :

$$Di(t) = \int_{x=t-T1}^{x=t} C(x)dx$$

De telles variante peuvent aussi permettre d'affiner la gestion de l'usure des pneumatiques d'une flotte de véhicules, par exemple de poids lourds.

## 2 Evaluation de l'information usure instantanée

Le procédé selon l'invention est **caractérisé en ce que** il comprend une étape d'évaluation de l'information usure instantanée.

On calcule de préférence pour chacune des roues des valeurs D1(t), D2(t), D3(t) et D4(t). Cette énumération étant effectuée pour un véhicule de tourisme à quatre roues.

Ces valeurs vont permettre un suivi de l'évolution de l'usure de chacune des roues.

$$Di(t) = \int_{x=t-T1}^{x=t} Si(x)dx$$

Ordre de grandeur :

T1 : Quelques fractions de secondes à quelques dizaines de minutes

Remarques:

Dans la réalisation et afin de simplifier les calculs, on utilisera en lieu et place des intégrales des sommes glissantes des valeurs successives du signal utile Si(t) sur des nombres de termes correspondant sensiblement à la durée T1.

Dans le cas d'une détection à plusieurs niveaux, on calculera une fonction Di(t) pour chaque Si(t).

Si(t) étant le signal correspondant à un niveau d'usure et à une roue. On effectuera donc un nombre de calcul de valeur de Di(t) correspondant au nombre de roues scrutées multiplié par le nombre de niveaux de détection.

On pourra bien sûr pour alléger les calculs ne disposer dans un premier temps que d'un calcul de Di(t) par niveau d'usure, cette valeur étant alors significative de l'atteinte du niveau d'usure i par au moins une des roues.

Ces options sont éventuelles et utilisables en combinaisons diverses.

## 3 Extraction des informations finales

Le procédé selon invention est **caractérisé en ce que** il comprend une étape d'extraction des informations finales selon laquelle les valeurs de Di(t) sont comparées chacune à des seuils individuels Sli.

Remarque :

Dans un but de simplification on pourra utiliser des valeurs de Sli identiques pour des roues du même essieu ou pour toute les roues du véhicule ou pour le même niveau de détection.

Ces tests sont suivis de compteurs qui s'incrémentent et se décrémentent en fonction des résultats des tests.

Lorsqu'un compteur Cpti franchit un seuil prédéterminé, alors on sait que la roue correspondante (ou les roues correspondantes) a atteint le seuil d'usure correspondant.

Ces options sont éventuelles et utilisables en combinaisons diverses.

## Exemples non limitatifs de Procédés permettant d'améliorer la finesse de détection.

Le procédé selon invention est aussi **caractérisé en ce que** il comprend éventuellement des étapes permettant d'améliorer la finesse de détection, telles que les suivantes:

- L'angle volant peut être utilisé pour invalider les mesures au delà d'un angle de braquage limite. Les résultats de mesure sont alors considérés comme inexistants pendant toute la durée du dépassement de l'angle limite, les compteurs Cpti restent alors inchangés ; et / ou

- La connaissance de l'angle volant peut être obtenue à partir des informations déjà disponibles pour certains dispositifs tels que le contrôle électronique de stabilité; et / ou

- La connaissance de l'hygrométrie extérieure permet d'améliorer l'extraction des informations finales en pondérant les seuils Sli ; et / ou

- Cette connaissance peut être par exemple obtenue à l'aide de capteurs de pluie servant par exemple au pilotage des essuie-glaces ; et /ou

- La connaissance de la pression intérieure de l'enveloppe pneumatique permet d'améliorer l'extraction des informations finales en pondérant les seuils Sli ; et / ou

- Cette connaissance peut être par exemple obtenue à l'aide de capteurs de pression installés dans les roues ; et / ou

- Les seuils Sli peuvent également être pondérés par la vitesse moyenne d'avancement du véhicule ; et / ou

- par la distance parcourue pendant la durée T1 et/ou le temps écoulé pendant le parcours de la distance d1.

Ces options sont éventuelles et utilisables en combinaisons diverses.

DISPOSITIF

Le dispositif selon l'invention est décrit dans les revendications 9 à 16.

**Différents modes de réalisation**

***Mode principal « acoustique »***

Dans ce mode, l'émission du signal d'usure est effectuée par des témoins « acoustiques » comme décrit précédemment dont la fonction est d'émettre un son lors de leur contact avec le sol, lors de leur disparition ou apparition.
La transmission est effectuée par voie aérienne (et probablement solidienne)
La détection est effectuée à l'aide d'un ou plusieurs microphones (ou éventuellement des accéléromètres dont la sensibilité dans la plage de fréquence d'émission des témoins est bonne, ou autres capteurs actuels ou futurs capables d'assurer la même fonction).

***Modes secondaires***

■ Mode mécanique

■ Mode électromagnétique

- avec variante détecteur de métaux

■ Mode optique

***Description du mode mécanique***

Le signal est ici constitué par des vibrations émises par des témoins mécaniques en matériau (identiques à ceux cités précédemment) plus dur que la bande de roulement du pneumatique et insérés dans celle-ci. Ces témoins apparaissent en surface du pneumatique lorsque le degré d'usure est-correspondant au niveau de détection est atteint. Ils créent alors une variation de rayon du pneu localisée, donc des variations de vitesse angulaire du pneumatique, de la roue et du moyeu et des vibrations du pneumatique, de la roue, du moyeu et de la liaison sol.
La détection est alors effectuée à l'aide préférentiellement des capteurs vitesse roue (par exemple ceux de l'ABS) ou de capteur accélérométrique ou de mesures d'effort ou de déplacement montés sur la roue, le moyeu, la liaison sol ou le châssis.

***Description du mode électromagnétique***

Le signal est ici constitué par la présence, l'apparition, la diminution ou l'absence d'émission d'un champ magnétique ou électrique.

Des témoins constitués de matériaux ferromagnétiques ou chargés en particules ferromagnétiques (notamment élastomères chargés) sont insérés dans la bande de roulement et s'usent avec le reste de la bande de roulement, leur signal s'affaiblissant progressivement jusqu'à un seuil qui déclenche l'alarme, ou bien sont implantés dans la bande de roulement et sont progressivement mis à jour, leur signal devenant perceptible jusqu'à un seuil qui déclenche l'alarme. On peut même dans une variante intéressante doper directement la bande de roulement (sur, ou à, une certaine profondeur correspondant au seuil de détection souhaité, par disparition ou, respectivement, apparition des particules ferromagnétiques) lors de l'extrusion ou dans une phase de fabrication située entre l'extrusion et la cuisson. Le dopage après fabrication est également possible.

Des capteurs de champ magnétique et/ou électrique sont montés dans la liaison sol (de préférence sur la jambe de force ou équivalent) ou sur le châssis (de préférence dans le passage d'aile).

On peut également rapprocher les capteurs de la bande de roulement, pour une meilleur détection, en positionnant le ou les capteurs sur un bras tel que décrit ci-dessous et en relation avec le dessin annexé, ce bras étant par exemple positionné dans le passage de roue, au dessus de la bande de roulement, et comportant selon la règle générale de invention, au moins un, de préférence trois capteurs, l'un positionné au regard de chaque flanc droit et gauche du pneumatique, afin de détecter précocement des déchéances dues par exemple à un pincement, et un troisième étant positionné sensiblement au regard du centre de la bande de roulement.

Ce bras peut être de forme et de dimensions quelconques. Ce peut être une barre incorporant le ou les capteurs et positionné transversalement à la roue, ou bien une surface plane ou concave suivant le profil de roue, éventuellement assez large de manière à accepter soit des capteurs placés en quinconce ou autre disposition asymétrique (ce qui permet par exemple de faire varier l'azimut) soit différents types de capteurs correspondant soit aux trois modes décrits, soit à un seul mode mais de dimensions ou autres caractéristiques différentes, de manière à générer des fréquences fa propres différentes.

Le traitement utilisé est alors identique à celui-ci détaillé précédemment, mais avec un traitement de l'information finale inversée (l'activation de l'alarme se faisant alors lorsque le compteur est inférieur à une valeur prédéfinie.

La variante de réalisation selon laquelle l'alarme est émise en cas d'affaiblissement ou de disparition du signal procure l'avantage important en matière de sécurité d'avertir le conducteur en cas de pneus non équipés des témoins, mais aussi en cas de défaillance de l'émission ou des capteurs ou du système de traitement (dans ce dernier cas, il s'agit d'une fausse alarme, mais qui est préférable à une non-détection d'usure).

Variante de mode magnétique électrique (détecteur de métaux)

Dans une variante intéressante du mode magnétique-électrique, le témoin est constitué de particules métalliques (ou équivalent) insérées dans la bande de roulement et la détection est effectuée à l'aide de capteurs détecteur de métaux. Ces particules ou inserts métalliques sont alors insérés jusqu'à la profondeur d'usure déterminée, afin d'avoir totalement disparu lorsque le niveau d'usure est atteint.

On pourra par ce procédé détecter également la présence de témoins en métal tels que décrits précédemment.

Inversement, toujours selon le principe général de l'invention, on pourra détecter l'apparition du signal d'inserts ou particules implantés en profondeur, et non pas la disparition du signal d'inserts ou particules implantés ou « dopés » en surface.

Le principe de détection est que le « récepteur » émet ou produit un champ électromagnétique qui est modifié par l'apparition ou la disparition des particules ou inserts métalliques (lesquels sont donc passifs), cette modification étant détectée par un capteur intégré au « récepteur ».

Ceci est un exemple de récepteur complexe.

***Description du mode optique***

Le signal est ici constitué par la présence, l'apparition, la diminution ou l'absence d'un signal lumineux contrastant avec le reste de bande de roulement.

Des témoins constitués de matériaux de couleur claire (ou contrastant nettement avec le reste de la bande de roulement) tels que par exemple des élastomères colorés ou blanc ou réfléchissant la lumière tels que par exemple des éléments métalliques sont insérés dans la bande de roulement et s'usent avec le reste de la bande de roulement, jusqu'à un seuil qui déclenche l'alarme, ou bien sont implantés dans la bande de roulement et sont progressivement mis à jour, leur signal devenant perceptible jusqu'à un seuil qui déclenche l'alarme. On peut même dans une variante intéressante doper directement la bande de roulement de matière réfléchissante ou colorée lors de l'extrusion ou dans une phase de fabrication située entre l'extrusion et la cuisson. Le dopage après fabrication est également possible.

Des capteurs de lumière (par exemple des diodes) avec éventuellement un éclairage localisé (qui peut par exemple être effectué par des diodes électroluminescentes) sont montés dans la liaison sol (de préférence sur la jambe de force ou équivalent) ou sur le châssis (de préférence dans le passage d'aile) ou dans un mode tout à fait préféré sur un bras comme décrit en exemple qui permet de se position en face et à proximité de la bande de roulement.

Le traitement utilisé est alors identique à celui détaillé précédemment,.

Il est à noter que l'abrasion régulière crée par la surface en contact avec le pneu nettoie en continue les témoins, les effets de salissure ou de pollution ne peuvent donc être que temporaires.

### Mode de réalisation préféré, « acoustique » :

Selon un mode de réalisation préféré, on emploiera des témoins de type « acoustique » générant un signal acoustique ».

A noter que de tels témoins acoustiques peuvent être, soit des inserts ou autres pièces, soit des formes géométriques ou sculptures adaptées pour, soit générer un signal acoustique spécifique au contact de la surface de contact, lequel signal disparaît lorsque ladite forme ou sculpture est usée au delà d'un seuil prédéterminé, soit générer un signal acoustique par leur contact avec la surface de contact lorsque, au delà d'un seuil d'usure prédéterminé du pneumatique, elle sont suffisamment mises à jour. On peut aussi utiliser des combinaisons diverses de tels témoins.

Le système ou dispositif comprend :

- Un émetteur acoustique inséré dans la masse et / ou dans une rainure ou « rib » du pneumatique et qui émet lorsque le pneumatique est usé.

Lorsque le pneumatique atteint un niveau d'usure limite, des témoins d'usure acoustiques émettent un signal sonore en rentrant en contact avec le sol.

- Un « récepteur » dont la fonction principale consiste à détecter la présence du signal acoustique caractéristique de l'atteinte de la limite d'usure du pneumatique et dont la fonction secondaire consiste à identifier la ou les roues émettant ce signal.

Par « récepteur » on entend dans toute la présente demande, y compris les revendications, un récepteur au sens large, c'est-à-dire comprenant au moins un capteur, et éventuellement au moins un support, comme par exemple un bras ou analogues, et éventuellement au moins un boîtier ou relais électronique ou calculateur central, et organes analogues, comme par exemple un émetteur de champ électro-magnétique couplé à un senseur de ce champ, dans l'option ci-dessus du « détecteur de métaux ».

### Description de l'émetteur :

Les éléments de l'émetteur sont insérés dans le pneumatique soit dès la fabrication, soit ultérieurement, comme déjà indiqué.

L'émetteur acoustique est **caractérisé en ce que** il comprend :

*Partie active* (fonction émission sonore lors du contact avec le sol ou la « surface de contact ») :

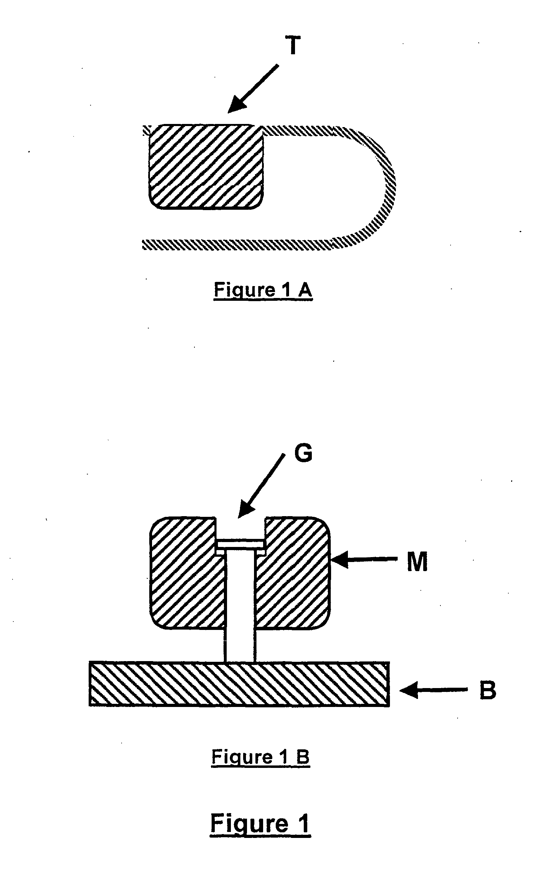

Ces éléments seront réalisés dans un matériau dur et seront (cf. FIG. 1):

- simples : petit élément en céramique par exemple, et / ou

- mécaniques : fonctionnement par martèlement par exemple d'un élément mobile de type marteau M (au contact de la surface de contact) sur une base B ancrée dans le pneumatique ;
  de préférence

- monobloc : constitué d'un matériau plein et bruyant de type céramique ou creux et métallique (peu coûteux, efficacité)

On pourra utiliser un ou plusieurs des matériaux suivants :

Métaux et alliages (acier,...)

Minéraux (verres, céramique,...)

Composites, fibres de verre, composites céramiques

Polymères ou élastomères (ex. : élastomères haut module par ex supérieur à 20 Mpa, résine formaldéhydes, bakélite)

Plastiques ou thermoplastiques

et analogues.

Il comprend également une partie d'accrochage:

*Partie accrochage au reste du pneumatique:*

*Base d'accrochage :*

L'accrochage, s'il est effectué dès la fabrication, sera de type griffes (ou forme analogues B anti-arrachement) noyées dans les pains de gomme P et /ou positionnés dans des rainures. Il sera de préférence plus long que large (meilleure résistance aux efforts longitudinaux).

Les témoins pourront être enrobés d'un matériau intermédiaire en terme de dureté entre le témoin et le matériau du pneumatique. Ce matériau possèdera de préférence trois fonctions ou au moins certaines d'entres elles:

⇒ Créer un gradient progressif de dureté entre le matériau du pneumatique et du témoin afin de répartir plus favorablement les contraintes de cisaillement mécaniques.

⇒ Servir de matériau adhérent intermédiaire entre le témoin et le matériau du pneumatique.

⇒ Protéger le témoin des agressions extérieures (mécaniques ou chimiques) avant que cet enrobage ne soit enlevé par usure.

L'accrochage sera effectué notamment:

A l'aide de griffes ou formes analogues insérées dans les pains de gomme

A l'aide de colle

Par vulcanisation et adhésion des différentes interfaces lors de la cuisson du pneumatique ou ultérieurement lors de la mise en place des témoins.

Dans une variante permettant d'améliorer la résistance aux efforts mécaniques d'arrachement qui s'expriment en majorité dans le sens longitudinal, la base d'accrochage sera plus longue que large (meilleure résistance aux efforts longitudinaux).

**Implantation**

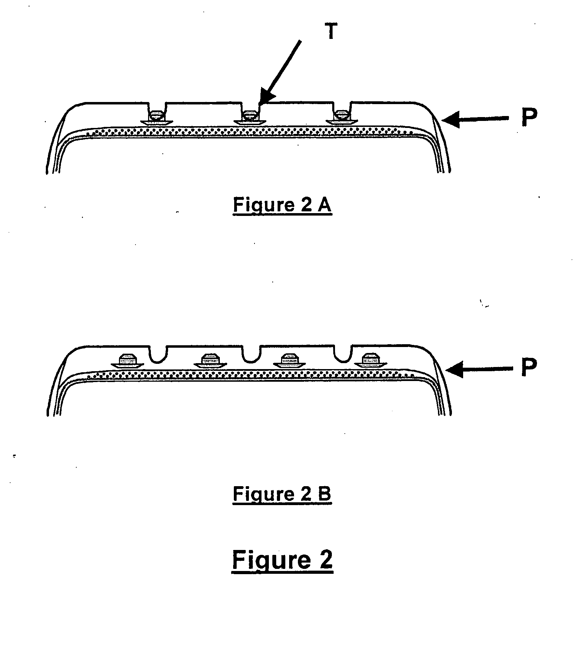

*Implantation des témoins dans le pneumatique (cf. FIG. 2)*

Le dispositif selon l'invention est **caractérisé en ce que** l'implantation des témoins T est effectuée transversalement en au moins, et de préférence en plusieurs endroits de la bande de roulement du « pneumatique » P (ou de manière générale de la surface ou zone d'usure considérée).

Dans une variante préférentielle, on retiendra une implantation transversale en 3 endroits : un centré, un côté flanc intérieur, un côté flanc extérieur.

Cette disposition est valable pour tous les modes de l'invention, pour les raisons indiquées plus haut, et notamment du fait que disposer un seul capteur central ouvrirait le risque de détecter trop tardivement une usure d'un flanc, par exemple en cas de pincement du train.

Cette implantation pourra éventuellement prendre place en fonds de sillon ou de rainure de « rib » (figure 2A), et / ou à l'intérieur d'un pain de gomme (figure 2B).

L'homme de métier comprendra que l'on pourra implanter les témoins de tous types utilisés selon l'invention, soit dans la masse du « pneumatique » soit dans un sillon, soit dans les deux types de positionnement, que l'on n'utilise que des témoins identiques ou que l'on utilise des combinaisons diverses de témoins (par exemple acoustiques dans un sillon et magnétiques dans la masse, et autres combinaisons diverses).

On distinguera deux implantations :

Implantation « transversale » : il s'agit du nombre et de la répartition des capteurs sur un azimut donné, par exemple 90°. Comme indiqué ci-dessus, de préférence trois capteurs par azimut.

Cette implantation transversale est répétée « longitudinalement » sur un certain nombre d'azimuts, dont le choix est adapté pour générer un signal, ou des groupes de signaux, caractéristiques et discriminables. Par exemple 90, 120, 145, 180, 270 ° pour une première série.

Cette implantation longitudinale permettra de distinguer la signature des témoins d'une signature créée par exemple par des cailloux incrustés dans les sillons du pneu.

Le nombre des témoins disposés longitudinalement sera élevé afin de palier à la perte ou à la destruction d'un ou plusieurs d'entre eux.

Comme indiqué plus haut, on pourra prévoir plusieurs séries longitudinales, chacune étant définie :

- par un ensemble d'azimuts et

- par la disposition, nombre, implantation transversale des témoins, éventuellement selon des implantations différentes selon les séries,

- l'ensemble formant une combinaison générant, pour chaque série, un signal spécifique et discriminable.

Les témoins pouvant être identiques ou différents en nombre, implantation et nature, selon les séries, bien que dans un but d'accroître la discrimination entre les niveaux de détection, on puisse retenir un type de témoin par niveau, ou encore pour distinguer l'usure d'une zone particulière du pneu (par exemple usure épaule dissymétrique) on implante dans cette zone un type de témoin spécifique.

Dans un souci d'efficacité, les témoins seront cependant, de préférence, les mêmes (de même nature) pour toutes les séries.

Ces capteurs seront implantés de manière identique ou non selon les séries.

L'extrémité haute du témoin arrivera lors du positionnement à une hauteur telle que ceux-ci entreront en contact avec le sol lorsque l'usure légale ou correspondant au niveau de détection souhaité sera atteinte..

Cette hauteur pourra être légèrement majorée afin de prévenir le conducteur avant que la limite d'usure ne soit atteinte.

Le dispositif selon l'invention comporte, comme mode de réalisation préféré de détecteurs acoustiques, des microphones.

Ceux ci sont implantés de préférence de la manière suivante.

*Implantation du ou des microphones*

Les microphones (ou tout capteur capable de capter le signal acoustique émis) pourront être implantés à raison d'un par roue scrutée ou par couple de roues jumelées, un par essieu ou un pour l'ensemble du véhicule, des solutions mixtes pouvant également être envisagées.

Si on utilise un microphone (ou autre capteur) par roue l'implantation sera effectuée sur le châssis ou sur éléments constitutifs de la liaison au sol (triangles, jambe de force ou moyeu,...) ou de la roue ou du pneu.

Si on utilise un microphone (ou autre capteur) par essieu, l'implantation sera effectuée sur le châssis ou sur éléments constitutifs de l'essieu ou de la liaison sol dudit essieu.

Si on utilise un microphone (ou autre capteur) pour l'ensemble du véhicule, l'implantation sera effectuée sur le châssis ou sur tout élément s'y rattachant.

Dans le cas de l'implantation châssis :

Le microphone sera implanté dans ou sous le châssis du véhicule, sensiblement au milieu et à distance sensiblement équivalente des quatre roues.

Il ne devra pas être trop proche du tunnel de passage de l'échappement et sera en retrait par rapport au plan du châssis afin d'être au mieux immunisé contre les bruits créés par l'échappement.

**Description du récepteur**

*Le microphone*

Le microphone pourra éventuellement avoir une bande passante relativement étroite et centrée sur des fréquences acoustiques élevées correspondant à la fréquence propre du témoin d'usure inséré.

*Implantation:*

Le microphone sera implanté dans ou sous le châssis du véhicule, sensiblement au milieu et à distance sensiblement équivalente des quatre roues.

Il ne devra pas être trop proche du tunnel de passage de l'échappement et sera en retrait par rapport au plan du châssis afin d'être au mieux immunisé contre les bruits créés par l'échappement.

*L'électronique*

Le dispositif selon l'invention comporte un moyen de traitement électronique et des moyens de connexion à ce moyen de traitement électronique, qui pourra être un système dédié (un microcontrôleur 4 bits, de préférence 8bits, 16 bits ou équivalent technique) ou être intégré dans un calculateur existant ou encore utiliser l'autoradio, le téléphone dédié au véhicule ou tout autre ensemble électronique actuel (ou futur) susceptible de comporter un microphone ( ou tout autre capteur capable de remplir la même fonction) et possédant par conséquent une électronique adaptée à l'acquisition et éventuellement au traitement de signaux acoustiques.

Dans le cas d'un calculateur dédié, celui-ci sera de préférence constitué d'un boîtier central composé deux étages électroniques:

- L'étage analogique qui conditionne les signaux analogiques et numériques entrants, contient la carte d'alimentation ainsi que la carte de conditionnement des signaux sortants

- L'étage numérique, articulé autour d'un calculateur et qui effectue l'ensemble des traitements.

Le dispositif selon l'invention comporte des moyens adaptés au traitement de signal décrit ci dessus., accessibles à tout homme de métier du traitement de signal et/ou de l'électronique, notamment de l'électronique embarquée à bord de véhicules.

L'implantation peut être réalisée dans un tel procédé :

■ Dès fabrication : noyé dans pain de gomme si possible (difficultés de moulage avec certaines sculptures, azimutage pneu sur moule).

■ Ultérieurement ou dès fabrication, implantation dans un rib, les griffes prenant de part et d'autre dans les pains.

**Détecteur de présence de chaînes à neige de clous ou dispositifs équivalents.**

Selon une variante d'application de l'invention dans le mode principal acoustique, celle ci propose un Détecteur de présence de chaînes neige et /ou de clous ou dispositif équivalent permettant d'accroître la mobilité.

Objectif

Détecter la présence de chaînes, de clous ou dispositifs équipant les pneumatiques ou les roues et permettant d'améliorer la mobilité des véhicules sur sol enneigé et/ ou verglacés.

Valoriser cette information au travers d'autres systèmes embarqués: (régulateur de vitesse, système de sécurité et d'aide à la conduite tels que les ABS, antipatinage et contrôle de trajectoire, ou encore amortisseurs pilotés)

Disposer de cette information valorisable dans le cadre des projets articulés autour du concept de "route intelligente" tel que AIDA™ afin d'automatiser les messages d'obligation ou d'interdiction de ce type d'équipement en fonction du type de route emprunté, de la météo et de la législation.

Conseiller le conducteur quant à l'opportunité d'utiliser chaînes neige, des pneus cloutés etc. en fonction du diagnostic contextuel (adhérence, température...) effectué par l'ordinateur de bord pendant le roulage.

Domaine d'application

Tous véhicules à moteur ou non, équipés de pneumatiques ou de bandes de roulement, du type décrit précédemment sans limitation.

Résumé

La présence de chaînes neige, de pneus cloutés ou dispositif spéciaux équivalents satisfait à des impératifs de tenue de route en conditions difficiles, mais peut aussi perturber le fonctionnement de systèmes de sécurité et d'aide à la conduite tels que les antiblocages des freins, antipatinage, amortisseurs pilotés et contrôles de trajectoire etc...
En outre, leur utilisation répond à une législation spécifique : autorisation ou interdiction, limitations d'utilisation.
Le dispositif proposé détecte la présence ou l'absence de chaînes neige, de pneus cloutés ou dispositif équivalent sur le véhicule et permet ainsi d'optimiser le comportement des systèmes de sécurité et d'aide à la conduite, de conseiller le conducteur sur l'opportunité de monter des chaînes, d'aider le conducteur à respecter la législation particulière à ce type d'équipement.
On désignera dans ce qui suit, par simplicité, par « chaîne neige » tout dispositif tel que les chaînes neiges, les pneus cloutés ou tout dispositif équivalent permettant de disposer d'une mobilité accrue en conditions précaires et de tout type connu ou futur.

Avantages

■ Optimiser le comportement des systèmes de sécurité et d'aide à la conduite en les informant de la présence de chaînes.

■ Conseiller le conducteur via l'ordinateur de bord quant à l'opportunité de mettre ou d'enlever ce type d'équipement en fonction du diagnostic contextuel (adhérence, température...) effectué pendant le roulage.

■ Aider l'usager à respecter les conditions particulières liées à l'utilisation des chaînes neige et dispositifs équivalents.

■ Réduire l'endommagement des routes et des chaînes lié à la pratique d'une vitesse excessive (> vitesse légale),

■ Fournir un service supplémentaire aux usagers dans le cadre des projets de route intelligente ou communicante.

Description

Principe

Lors du roulage d'un véhicule sur route, les chaînes ou dispositifs permettant d'améliorer la mobilité émettent généralement un signal acoustique tout à fait semblable (généralement en plus fort) au signal utilisé pour la détection des témoins d'usure en mode principale de détection acoustique.
Cette signature acoustique est fonction de la géométrie et de la disposition des chaînes ou du dispositif utilisé (radiales, alvéolées, avec un nombre variable d'arceaux...).
Le principe de détection est donc basé sur un effet général indépendant du type de dispositif utilisé : la génération d'une signature acoustique harmoniques du tour de roue et qui peut être détecté à l'aide d'un dispositif et / ou d'un procédé tout à fait analogue à celui décrit précédemment dans le mode principale du détecteur d'usure : mode acoustique.
Dans une variante spécifique, les chaînes seront conçues pour émettre une signature vibratoire particulière ( par exemple harmonique du tour de roue sur un ou des harmoniques comprises entre 1 et 64), la détection est alors effectuée préférentiellement sur les harmoniques générées ou suivant l'implantation retenue, comme précédemment dans le détecteur d'usure. Cependant, le premier critère cité ci-dessus peut généralement encore fonctionner dans ce dernier cas.
D'autres caractéristiques et avantages de l'invention seront mieux compris à la lecture de la description qui va suivre, et en se référant au **dessin annexé** sur lequel :

- la figure 1, qui se compose des figures 1A et 1B, représente un exemple non limitatif de la morphologie des témoins T dont l'un est monobloc (figure 1A) et l'autre est constitué d'une base d'accrochage B, d'un guide g solidaire de cette base, et d'un marteau M coulissant sur le guide et qui va frapper la base pour générer un signal sonore.

- la figure 2 , qui se compose des figures 2A et 2B, représente deux exemples non limitatifs d'implantation des témoins T dans le pneumatique (en trois endroits centré, flancs intérieur et extérieur, en fond de sillon ou « rib », 2A) ou (en quatre endroits, dans la masse de la gomme, 2B).

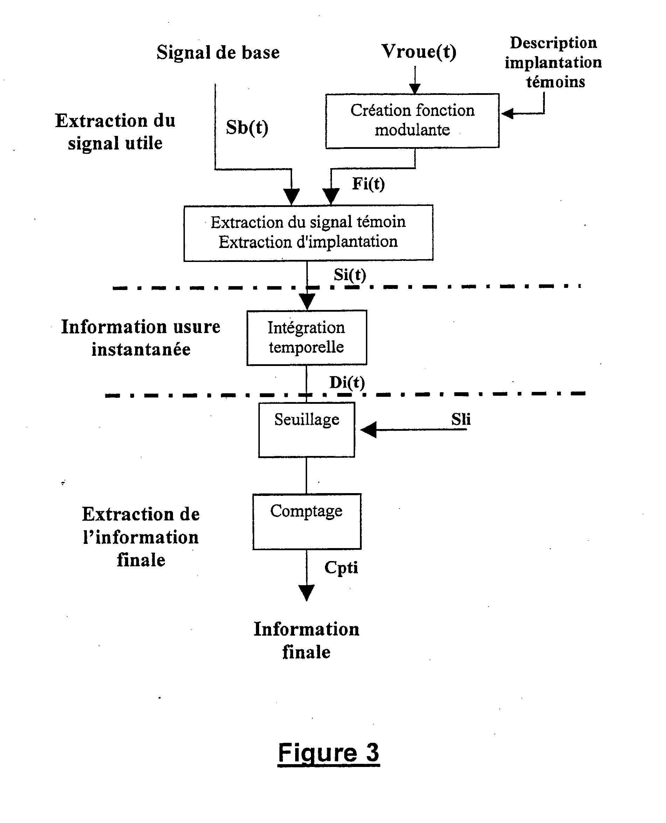

- la figure 3 représente un schéma synoptique du traitement général du détecteur d'usure (en mode acoustique pour une roue et un niveau de détection)

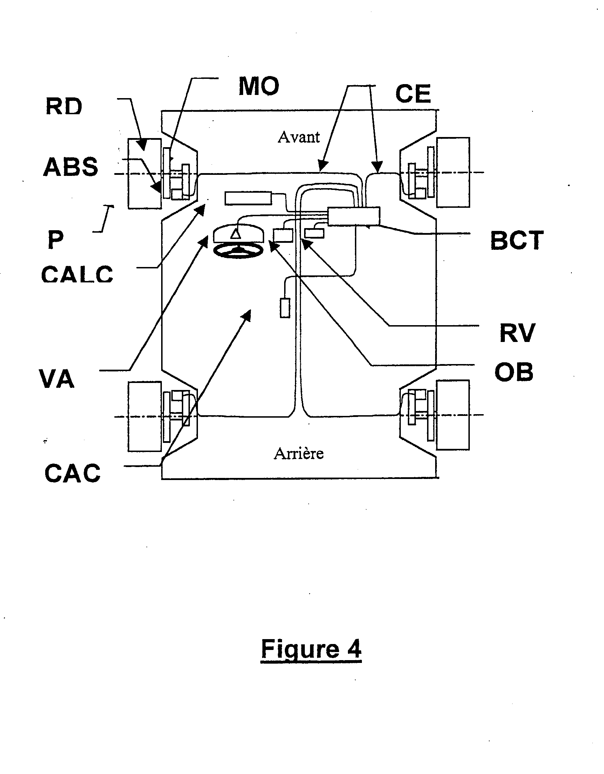

- la figure 4 représente un mode non limitatif d'implantation d'un système selon l'invention sur un véhicule

- la figure 5 représente un mode non limitatif de positionnement des capteurs par rapport à une roue dudit véhicule

- la figure 6 représente un exemple non limitatif de placement de capteurs selon le schéma de la figure 5.

Sur les figures, les mêmes références ont les mêmes significations, qui sont les suivantes :

| T | témoin d'usure | B | base d'accrochage |
|---|---|---|---|
| G | guide | M | marteau |
| P | pneumatique | RD | roue dentée |
| ABS™ ABS | capteur ABS | CALC | calculateurs tels que Contrôle de stabilité Antipatinage |
| V A | voyant d'alerte | CAC | capteur acoustique central |
| M O | moyeu | | |
| C E | câblages électriques | | |
| BCT | boîtier de conditionnement et de traitement du détecteur d'usure des pneumatiques selon l'invention | | |
| R V | régulateur de vitesse | | |
| O B | ordinateur de bord | | |
| S C | support de capteurs | C | Capteurs |

**EXEMPLES:**

**<u>Exemple de réalisation</u>**

**Véhicule de développement : Rover™ 75**

Des témoins métalliques ont été insérés dans la bande de roulement de chaque pneumatique. Cette implantation a été effectuée à l'aide d'un seul type de témoin (en inox) à raison de deux jeux de 12 témoins répartis pour la première implantation (entaillement restant 2 mm) sur les azimuts pneu 0°, 90°, 180°, 270° à raison de trois témoins sur chaque azimut (épaule intérieure, milieu de la bande de roulement, épaule extérieure) et pour la deuxième implantation (limite d'usure légale 1.6 mm) sur les azimuts pneu 0°, 45°, 180°, 225° à raison de trois témoins sur chaque azimut (épaule intérieure, milieu de la bande de roulement, épaule extérieure)

Le signal de base Sb est issu d'un microphone positionné sensiblement au milieu du châssis en retrait par rapport au sous bassement afin d'être protégé des projections et du bruit créé par la ligne d'échappement.

On utilise pour la mesure des vitesses roues les capteurs préexistants de marque Siemens Automotive™ sur le véhicule et utilisés pour l'ABS™ Bosch™.

Les signaux issus de ces capteurs sont ensuite acheminés vers un boîtier central positionné à proximité du calculateur ABS™.

Ce boîtier central est composé de deux étages électroniques:

- L'étage analogique qui conditionne les signaux analogiques et numériques entrants, contient la carte d'alimentation ainsi que la carte de conditionnement des signaux sortants

- L'étage numérique, articulé autour d'un microcontrôleur 8 bits et qui effectue l'ensemble des traitements.

Le dispositif n'est en mode actif que dans la plage de 20 à 60 km/h, en dehors de cette plage, les données sont considérées comme inexistantes et les valeur de compteurs et des signaux Si n'évolue pas.

Dans la plage d'activation :

Les signaux issus des capteurs de vitesses roues sont dans un premier temps conditionnés par l'étage d'entrée analogique afin d'être numérisés et utilisés par l'étage de traitement numérique.

A partir de la description de l'implantation des témoins pour les deux niveaux d'usure retenus et des signaux vitesse roue fournis par les capteurs ABS, l'étage de traitement numérique calcule les signaux Fi(t) pour les deux niveaux d'usure retenus (2 mm et 1.6 mm) et pour chacune des roues, soit 8 signaux.

L'étage d'entrée analogique filtre le signal de base Sb autour de la fréquence témoins : 3500 Hz (les témoins ont ici été pris identiques pour les deux niveaux d'usure).

A l'aide d'un algorithme utilisant notamment la transformation d'Hadamard (élimine les stockages des données et les opérations multiplication ou addition trop complexes pour un microcontrôleur 8 bits) appliquée au signal de base en quadrature de phase (traitement appliqué uniquement au module et élimination de la phase), il extrait le signal utile en procédant dans un pr

Il intègre ensuite (sommation) les huit signaux Si(t) sur une durée de 2 s et extrait à l'aide de huit seuils Sli évolutifs en fonction de la vitesse et fixé par auto-apprentissage les valeur de compteurs (Cpti).

L'information finale est affichée au tableau de bord à l'aide d'un pictogramme qui reste éteint en l'absence de détection, qui devient clignotant lorsqu'une détection de premier niveau (2 mm) a lieu, qui devient rouge fixe lorsqu'une détection deuxième niveau (1.6 mm) a eu lieu.

Les compteurs ont été configurés pour évoluer entre 0 et 255.

Si un des compteurs devient supérieur à 200, l'alarme (visuelle et sonore lors de l'allumage de l'alarme visuelle) correspondant à son niveau et à sa roue est déclenchée, elle ne se ré éteint que lorsque le compteur est repassé en dessous de 170. L'écart entre la valeur d'allumage et la valeur d'extinction permet d'éviter un clignotement désagréable de la diode électroluminescente lors du changement d'état.

Cette information est fournie en parallèle à un régulateur de vitesse qui a été modifié pour moduler sa vitesse en fonction de l'indication d'usure et de la présence de pluie (détectée par un capteur additionnel pour essuie glace monté pour les besoins du développement).

### Différents modes de réalisation :

Mode principal

Dans ce mode, l'émission du signal d'usure est effectuée par des témoins acoustiques comme décrit précédemment dont la fonction est d'émettre un son lors de leur contact avec le sol.

La transmission est effectuée par voie aérienne (et probablement solidienne)

La détection est effectuée à l'aide d'un ou plusieurs microphones (ou éventuellement des accéléromètres dont la sensibilité dans la plage de fréquence d'émission des témoins est bonne).

On peut également utiliser les trois modes secondaires décrits plus haut en détail.

■ Mode mécanique

■ Mode électromagnétique

■ Mode optique

En l'état actuel des technologies et des options des constructeurs, le mode « acoustique » semble être le mode préféré.

Il est cependant très probable que, assez rapidement, au moins pour les véhicules dits « haut de gamme », le mode « magnétique » ou « électromagnétique » devienne préféré.

### Exemples de montage de capteurs :

Dans un mode tout à fait intéressant, les capteurs de mesure acoustique, électrique ou magnétiques peuvent être montés sur un support qui permet de les positionner en face de la bande de roulement.

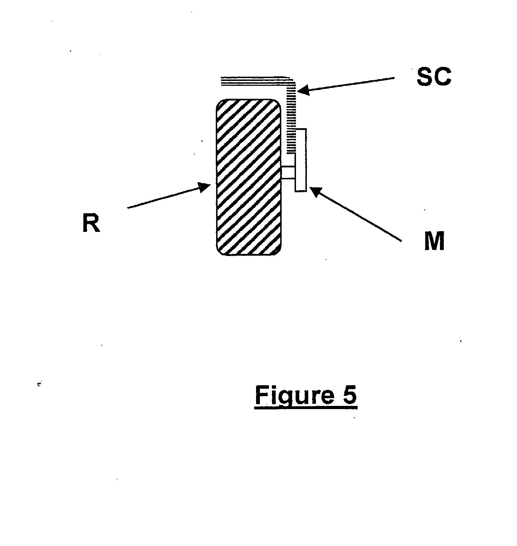

Ce support SC dans une variante préférée est fixé au moyeu M de roue R ou sur un élément de la liaison sol. Il est donc solidaire des mouvement de la roue et peut en particulier suivre les roues directrice en phase de braquage comme représenté sur le dessin (figure 5).

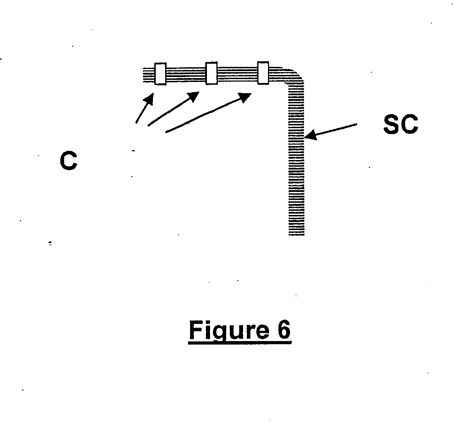

Exemple de support SC à trois capteurs C visant respectivement l'épaule extérieure, le milieu et l'épaule intérieure de la bande de roulement du pneumatique, comme représenté sur le dessin (figure 6).

AVANTAGES GENERAUX DE L'INVENTION

Le coût de montage et de fabrication de la partie pneu et de la partie véhicule sont extrêmement bas

Sa fiabilité et sa robustesse sont très élevées

La transmission de l'information entre le « pneumatique » et le châssis du véhicule ne requiert pas de modification importante (équipement sur un véhicule neuf en cours de production ou en remplacement aisé)

Le montage sur le « véhicule » est très simple.

L'insertion des éléments émetteurs dans le pneumatique est simple et compatible avec le procédé de fabrication.

Les éléments insérés dans le pneumatique ne perturbent ni son fonctionnement ni son intégrité.

Le conducteur est automatiquement averti lorsque ses pneumatiques sont usés.

Dans une variante plus performante, le système indique au conducteur la ou les roues ayant atteint la limite d'usure.

L'ordinateur de bord, en fonction du diagnostic contextuel (adhérence, présence de pluie,...) qu'il effectue en roulage conseille le conducteur sur la conduite à tenir (réduction de vitesse appropriée,...).

Les systèmes de sécurité sont informés de l'usure de chacun des pneumatiques et intègrent cette information dans leur stratégie.

Le diagnostic de maintenance effectué par l'ordinateur de bord intègre l'information usure de chacun des pneumatiques.

Le régulateur de vitesse en fonction de l'état d'usure des pneumatiques et de la présence de pluie (information fournie par exemple par les capteurs de pluie utilisés pour les essuies glace) adapte la vitesse du véhicule afin d'éviter tout aquaplanage ou risque de perte d'adhérence.

Le conducteur est automatiquement averti lorsque ses pneumatiques sont usés.

Dans une variante plus performante, le système indique au conducteur la ou les roues ayant atteint la limite d'usure.

L'ordinateur de bord, en fonction du diagnostic contextuel (adhérence, présence de pluie,...) qu'il effectue en roulage conseille le conducteur sur la conduite à tenir (réduction de vitesse appropriée,...).

Les systèmes de sécurité sont informés de l'usure de chacun des pneumatiques et intègrent cette information dans leur stratégie.

Le diagnostic de maintenance effectué par l'ordinateur de bord intègre l'information usure de chacun des pneumatiques.

**Revendications**

1. **Procédé** pour surveiller l'état d'usure d'un pneumatique ou d'une bande de roulement comprenant les 5 étapes suivantes :

   a. Une étape d'implantation d'au moins un témoin d'usure dans le pneumatique ou la bande de roulement
   b. La génération par ledit témoin d'usure d'un signal spécifique harmonique du tour de roue, ledit signal apparaissant ou disparaissant lorsqu'un seuil prédéterminé d'usure de la bande de roulement est atteint, le signal suivant l'étape b dépendant du nombre de témoins mis à jour, mais aussi de leur position, de la vitesse du véhicule et des caractéristiques des témoins insérés dans le pneumatique et étant composé d'une fréquence de base, correspondant à la fréquence fa propre au témoin inséré dans le pneumatique, et modulée par une fonction **F(t)** qui dépend du nombre de témoins, de leur disposition ou implantation, mais aussi de la vitesse de rotation de la roue, cette fonction **F(t)** étant une fonction harmonique du tour de roue et étant également prédéterminée pour être spécifique et discriminable et / ou pour apporter des informations complémentaires ;
   c. La détection dudit signal
   d. Un traitement dudit signal pour identifier l'usure, comprenant une phase d'extraction des harmoniques dudit signal, l'étape d comprenant une étape A) de traitement de signal en vue de l'extraction globale du signal utile S(t) et comportant les étapes B) et C) suivantes ou l'étape C) suivante :

   B) extraction du signal témoin
   C) extraction du signal d'implantation Fi(t), et

   sachant que dans l'étape B), on effectue un filtrage numérique ou analogique visant à ne garder que les signaux correspondant à la (aux) fréquence (s) propre (s) fa du signal caractéristique du témoin inséré dans le pneumatique et sachant que dans l'étape C), le schéma d'implantation des témoins dans le pneumatique induit du fait de la rotation de la roue un signal modulant F(t) harmonique du tour de roue et on utilise cette propriété pour extraire du signal de base les signaux apparaissant à des fréquences harmoniques du tour de roue correspondant à l'implantation des témoins qu'on cherche à détecter, Fi(t) étant le signal modulant correspondant à une roue i, et à un niveau d'usure, c'est à dire à une implantation,

e. Une étape finale d'identification du niveau d'usure Si(t) basée sur la composante harmonique du signal issue du traitement précédent, **Si(t)** étant le signal correspondant à un niveau d'usure et à une roue i.

2. **Procédé** selon la revendication 1 **caractérisé en ce que** dans l'étape c) d'extraction du signal d'implantation, ladite démodulation est effectuée à partir d'une corrélation entre le signal de base et le signal modulant, qui est fonction du schéma d'implantation des témoins dans le pneumatique et de la vitesse de la roue testée et/ou du véhicule.

3. **Procédé** selon l'une quelconque des revendications 1 à 2 **caractérisé en ce qu'**il comporte une étape d'indentification de la roue incriminée
dans laquelle la détermination de la roue s'effectue par un suivi de la phase du signal Si(t) et une comparaison par rapport à chacune des vitesses roues.

4. **Procédé** selon l'une quelconque des revendications 1 à 3, **caractérisé en ce qu'**il comprend une étape d'extraction des informations finales selon laquelle les valeurs de Di(t) sont comparées chacune à des seuils individuels Sli, Di(t) étant définie par $Di(t) = \int_{x=t-T1}^{x=t} Si(x)dx$ ; et éventuellement

**en ce que** ces seuils Sli peuvent être pondérés par la connaissance de l'hygrométrie extérieure ou par la vitesse moyenne d'avancement du véhicule.

5. **Procédé** selon l'une quelconque des revendications 1 à 4 **caractérisé en ce qu'**il comporte un mode mécanique dans lequel

- on détecte le signal constitué par des vibrations émises par des témoins mécaniques en matériau plus dur que la bande de roulement du pneumatique et insérés dans celle-ci, qui apparaissent en surface du pneumatique lorsque le degré d'usure est correspondant au niveau de détection est atteint, et créent alors une variation de rayon du pneu localisée, donc des variations de vitesse angulaire du pneumatique, de la roue et du moyeu et des vibrations du pneumatique, de la roue, du moyeu et de la liaison sol ;
- la détection étant alors effectuée à l'aide préférentiellement des capteurs vitesse roue par exemple ceux de dispositifs antiblocage de roue ou de capteur accélérométrique ou de mesures d'effort ou de déplacement montés sur la roue, le moyeu, la liaison sol ou le châssis.

6. **Procédé** selon l'une des revendications 1 à 4 **caractérisé en ce qu'**il comporte *un mode électromagnétique* dans lequel

- on détecte le signal constitué par la présence, l'apparition, la diminution ou l'absence de témoins émettant ou modifiant un champ magnétique ou électrique, et
- des témoins constitués de matériaux ferromagnétiques, métalliques ou chargés en particules ferromagnétiques ou métalliques, notamment élastomères chargés, sont insérés, éventuellement par dopage, lors de l'extrusion ou dans une phase de fabrication située entre l'extrusion et la cuisson ou après fabrication, dans la bande de roulement à une certaine profondeur correspondant au seuil de détection souhaité et s'usent avec le reste de la bande de roulement, et on détecte leur signal s'affaiblissant progressivement jusqu'à un seuil qui déclenche l'alarme, ou bien sont implantés dans la bande de roulement et sont progressivement mis à jour, et on détecte leur signal devenant perceptible jusqu'à un seuil qui déclenche l'alarme.

7. **Procédé** selon l'une des revendications 1 à 4 **caractérisé en ce qu'**il comporte *un mode optique* dans lequel

- on détecte le signal constitué par la présence, l'apparition, la diminution ou l'absence d'un signal lumineux contrastant avec le reste de bande de roulement ; et
- des témoins constitués de matériaux de couleur claire ou contrastant nettement avec le reste de la bande de roulement tels que par exemple des élastomères colorés ou blanc ou réfléchissant la lumière tels que par exemple des éléments métalliques, sont insérés, éventuellement par dopage, lors de l'extrusion ou dans une phase de fabrication située entre l'extrusion et la cuisson ou après fabrication, dans la bande de roulement à une certaine profondeur correspondant au seuil de détection souhaité et s'usent avec le reste de la bande de roulement, jusqu'à un seuil qui déclenche l'alarme, ou bien sont implantés dans la masse de la bande de roulement et sont progressivement mis à jour, leur signal devenant perceptible jusqu'à un seuil qui déclenche l'alarme ;
- la détection étant effectuée par des capteurs de lumière, par exemple des diodes avec un éclairage localisé qui peut être effectué par des diodes électroluminescentes qui sont montés dans la liaison sol de préférence sur la jambe de force ou sur le châssis de préférence dans le passage d'aile ou dans un mode tout à fait préféré sur un bras support qui permet de positionner les capteurs en face et à proximité de la bande de roulement.

8. **Procédé** selon l'une des revendications 1 à 4 **caractérisé en ce qu'**il comporte *un mode acoustique* dans lequel on emploie des témoins de type acoustique générant un signal acoustique et **en ce que** de tels témoins acoustiques sont, soit des inserts, soit des formes géométriques ou sculptures adaptées pour, soit générer un signal acoustique spécifique au contact de la surface de contact, lequel signal disparaît lorsque ladite forme ou sculpture est usée au delà d'un seuil prédéterminé, soit générer un signal acoustique par leur contact avec la surface de contact lorsque, au delà d'un seuil d'usure prédéterminé du pneumatique, elles sont suffisamment mises à jour, les témoins acoustiques étant insérés dans la masse ou dans un sillon, rainure du pneumatique ou de la bande de roulement du pneumatique, en surface ou à une profondeur adaptée de façon à entrer en contact avec le sol ou toute surface de contact lorsque la limite d'usure est atteinte.

9. **Dispositif** pour surveiller l'état d'usure d'un pneumatique ou d'une bande de roulement suivant le procédé décrit dans l'une des revendications 1 à 8 comprenant les moyens suivants :

   a. au moins un témoin d'usure incorporé ou implanté dans le pneumatique ou la bande de roulement
   b. ledit témoin d'usure étant adapté pour générer un signal spécifique harmonique du tour de roue, quand celui-ci apparait en surface du fait de l'usure de la bande de roulement, ou étant adapté pour arrêter de générer un signal harmonique du tour de roue lorsqu'il est usé avec la bande de roulement ou disparait de ce fait,
   c. un moyen de détection dudit signal
   d. un moyen de traitement dudit signal pour identifier l'usure, comprenant notamment une phase d'extraction des harmoniques dudit signal
   e. un moyen d'identification du niveau d'usure basée sur la composante du signal issue du traitement précédent.

10. **Dispositif** selon la revendication 9 **caractérisé en ce que** lesdits témoins sont choisis parmi des particules fines ou grossières, agglomérées ou non, et des inserts de dimensions et géométries variées, y compris des sculptures ou formes intégrées dans ou sur le pneumatique soit dès la fabrication soit ultérieurement, mécaniquement ou par dopage, des inserts, des formes géométriques ou sculptures adaptées pour, générer un signal spécifique lorsque ces témoins apparaissent à la surface du pneumatique ou de la bande de roulement.

11. **Dispositif** selon l'une quelconque des revendications 9 à 10 **caractérisé en ce que** l'implantation est effectuée transversalement c'est-à-dire selon un azimut de roue donné en au moins un, et de préférence en plusieurs endroits du pneumatique ou de la bande de roulement et **en ce que** on effectue en particulier une implantation transversale en 3 endroits : un centré, un côté flanc intérieur, un côté flanc extérieur,
soit dans la masse de la gomme soit dans un sillon ou rainure du pneumatique, soit les deux ou
**en ce que** cette implantation transversale est répétée longitudinalement sur un certain nombre d'azimuts, dont le choix est adapté pour générer un signal, ou des groupes de signaux, caractéristiques et discriminables, par exemple 90, 120, 145, 180, 270 ° pour une première série et d'autres azimuts pour chaque autre série, certains azimuts pouvant être communs à plusieurs séries, notamment le premier azimut, et optionnellement l'implantation comporte transversalement et/ou selon les niveaux plusieurs séries longitudinales d'implantations de témoins.

12. **Dispositif** selon l'une quelconque des revendications 9 à 11 **caractérisé en ce que** les capteurs peuvent être montés dans la liaison sol ou sur le châssis ou sur un support qui permet de les positionner en face de la bande de roulement et ledit support étant fixé au moyeu de roue ou sur un élément de la liaison sol, est donc solidaire des mouvements de la roue et pouvant en particulier suivre les roues directrice en phase de braquage ;
ledit support ayant de préférence trois capteurs placés respectivement au regard de l'épaule ou du flanc extérieur, le milieu et l'épaule ou le flanc intérieur de la bande de roulement du pneumatique.

13. **Dispositif** selon l'une quelconque des revendications 9 à 12 **caractérisé en ce que** les témoins et la détection sont réalisés suivant un *mode mécanique*

   - le signal étant constitué par des vibrations émises par des témoins mécaniques en matériau plus dur que la bande de roulement du pneumatique et insérés dans celle-ci ;

- la détection étant effectuée à l'aide des capteurs vitesse roue par exemple ceux de dispositifs antiblocage de roue ou de capteurs accélérométrique ou de mesures d'effort ou de déplacement montés sur la roue, le moyeu, la liaison sol ou le châssis.

14. **Dispositif** selon l'une des revendications 9 à 12 **caractérisé en ce qu'**un mode **acoustique** est utilisé dans lequel

- l'émission du signal d'usure est effectuée par des témoins acoustiques insérés dans la masse et / ou dans une rainure ou sillon du pneumatique et réalisés dans un matériau dur dont la fonction est d'émettre un son ou signal acoustique lors de leur contact avec le sol, pouvant être, soit des inserts, soit des formes géométriques ou sculptures adaptées,
- la transmission est effectuée par voie aérienne et éventuellement solidienne
- la détection est effectuée à l'aide d'un ou plusieurs microphones de bande passante centrée sur le signal du témoin implantés roue par roue, ou par essieu ou un pour l'ensemble du véhicule, et éventuellement au moins un support, comme par exemple un bras, et éventuellement au moins un boîtier ou relais électronique ou calculateur central, dont la fonction principale consiste à détecter la présence du signal acoustique caractéristique de l'atteinte de la limite d'usure du pneumatique et dont la fonction secondaire consiste à identifier la ou les roues émettant ce signal.

15. **Dispositif** selon l'une quelconque des revendications 9 à 12 **caractérisé en ce qu'**il utilise un *mode électromagnétique* dans lequel

- le signal est constitué par la présence, l'apparition, la diminution ou l'absence d'émission d'un champ magnétique ou électrique ;
- et le dispositif comprend à cet effet des témoins constitués de matériaux ferromagnétiques ou chargés en particules métalliques ou ferromagnétiques, notamment élastomères chargés, qui sont insérés dans la bande de roulement lors de l'extrusion ou dans une phase de fabrication située entre l'extrusion et la cuisson, ou après fabrication ou réalisés par dopage et ceci lors de la fabrication ou ultérieurement et s'usent avec le reste de la bande de roulement, leur signal s'affaiblissant progressivement jusqu'à un seuil qui déclenche l'alarme, ou bien sont implantés dans la bande de roulement et sont progressivement mis à jour, leur signal devenant perceptible jusqu'à un seuil qui déclenche l'alarme ;
- des capteurs de champ magnétique et/ou électrique sont montés dans la liaison sol ou sur le châssis.

16. **Dispositif** selon l'une quelconque des revendications 9 à 13 **caractérisé en ce qu'**il utilise un *mode optique* dans lequel

- le signal est constitué par la présence, l'apparition, la diminution ou l'absence d'un signal lumineux contrastant avec le reste de bande de roulement, et
- des témoins constitués de matériaux de couleur claire ou contrastant nettement avec le reste de la bande de roulement tels que par exemple des élastomères colorés ou blanc ou réfléchissant la lumière tels que par exemple des éléments métalliques sont insérés dans la bande de roulement lors de l'extrusion ou dans une phase de fabrication située entre l'extrusion et la cuisson, ou après fabrication et éventuellement réalisés par dopage et ceci lors de la fabrication ou ultérieurement et s'usent avec le reste de la bande de roulement, jusqu'à un seuil qui déclenche l'alarme, ou bien sont implantés dans la bande de roulement et sont progressivement mis à jour, leur signal devenant perceptible jusqu'à un seuil qui déclenche l'alarme ;
et
- des capteurs de lumière par exemple des diodes avec éventuellement un éclairage localisé qui peut par exemple être effectué par des diodes électroluminescentes sont montés dans la liaison sol ou sur le châssis ou dans un mode tout à fait préféré sur un bras support qui permet de se positionner en face et à proximité de la bande de roulement.

**Claims**

1. **Process** for monitoring the state of wear of a tyre or tyre tread, comprising the following five steps:

   a. A step placing at least one tread wear indicator in the tyre or tyre tread
   b. The generation, by said tyre tread wear indicator, of a wheel circumference-specific harmonic, said signal appearing or disappearing when a pre-determined tyre tread wear threshold is reached, the signal according to step b being dependent on the number of indicators exposed as well as their position, vehicle speed, and the characteristics of the indicators fitted in the tyre, and comprising a baseline first harmonic frequency **fa** specific to the indicator fitted in the tyre and modulated according to a function F**(t)** which depends on the number of indicators and their positional placement or fitting, but also on the wheel rotation speed, said function F**(t)** being a harmonic function of the wheel circumference and generally being pre-determined to make it specific and discriminatable and/or to provide further information;

c. Detection of said signal

d. Processing of said signal to identify the degree of tyre wear, this step including the extraction of harmonics from said signal, step d including a signal processing phase prior to overall extraction A) of the signal-of-interest S(t) and comprising the steps B) and C) below or step C) below:

> B) extraction of the tread indicator signal and/or
> C) extraction of the placement signal, and

it being understood that step B) involves a digital or analogue filtering operation designed to separate out those signals that match to the specific frequency or frequencies typical to the indicator fitted in the tyre, and it being understood that in step C), as the wheel rotates, the pattern in which indicators are placed in the tyre creates a wheel circumference-specific harmonic 'modulating' signal, and that this property is used to extract from the baseline signal the other signals appearing at wheel circumference-specific harmonic frequencies corresponding to the indicator placement patterns to be detected, where Fi(t) is the modulating signal corresponding to a wheel i at a given degree of tread wear, i.e. a given pattern, Si(t) being the signal corresponding to a given degree of tread wear and to a wheel i.

e. A final tread wear identification step based on the harmonic component of the signal identified in the previous processing step

2. **Process** according to claim 1 **characterized in that** during the pattern signal extraction step, said demodulation may be performed based on a correlation between baseline signal and modulating signal, which depends on the pattern in which indicators are placed in the tyre and on the speed of the test wheel and/or vehicle.

3. **Process** according to any of claims 1 to 2 **characterized in that** said process includes any further refinement steps:

**<u>Identification of the problem wheel:</u>**

- When cornering, or when there is a differential between torques on the wheel axles or even on the wheels, it can be considered that each wheel has its own speed and thus that, over a sufficient timeframe, it becomes possible to identify the wheel by monitoring the Si(t) signal phase and cross-comparing it against the speed of each wheel;

- similarly, since vehicles do not generally travel at the exact same speed, particularly over longer timeframes, the measurement is carried out over a sufficiently long timeframe T1, i.e. from several seconds to several minutes, to prevent any confusion should an identical vehicle be travelling alongside;

- Thus, the baseline signal phase can be iteratively compared against typical signals for the speed of each wheel, which in a preferred embodiment shall be the wheel speed signals provided by sensors fitted on anti-lock systems.

- this makes it possible to deduce whether the wheel(s) detected as having reached the wear limit are indeed a wheel or wheels on our vehicle, and which one(s).

4. **Process** according to any of claims 1 to 3, **characterized in that** it comprises a step extracting the final information in which the Di(t) or Si(t) values are each compared against individual thresholds, Sli; and possibly also

- wherein these Sli thresholds may be weighted by feedback on outdoor humidity or by the average speed of vehicle travel

- these tests are monitored by counters that count in up-increments or down-increments according to the results of the tests; when a counter Cpti crosses a pre-set threshold, it indicates that the corresponding wheel has reached its corresponding wear threshold, Di(t) being defined as $Di(t) = \int_{x=t-T1}^{x=t} Si(x)dx$ .

5. **Process** according to any of claims 1 to 4 **characterized in that** said process includes a mechanical mode:

and wherein:

**in said mechanical mode,**

- signal detection is run on a signal formed by the vibrations emitted by mechanical tread indicators built in a tougher material than the tyre tread into which they are inserted, and which become visible at the tyre surface when the corresponding degree of tread wear for the corresponding detection level is reached, thus creating a localized variation in tyre radius, and therefore variations in the angular speed of the tyre, wheel and hub, and vibrations in the tyre, wheel, hub, and suspension system;
- detection is therefore, in a preferred embodiment, performed by wheel speed sensors, such as those fitted on anti-lock systems, or by acceleration sensors, or torque or displacement sensors fitted on the wheel, hub, suspension system or vehicle frame.

6. **Process** according to any of claims 1 to 4 **characterized in that** said process includes an electromagnetic mode wherein:

- signal detection is run on a signal formed by the presence, occurrence, fade-away or absence of indicators emitting or modifying an electrical or magnetic field, and
- indicators formed of ferromagnetic or metallic materials or materials, and particularly elastomers, loaded with ferromagnetic or metallic particles are inserted, possibly by doping, either during extrusion, during a manufacturing phase downstream of extrusion and upstream of curing, or during a post-manufacturing phase, into the tyre tread at a specific depth corresponding to the desired detection threshold, said indicator inserts wearing down along with the rest of the tyre tread, wherein their weardown signal fades progressively until a threshold is reached that triggers an alarm, or else are placed inside the tyre tread and progressively exposed until giving a perceptible signal until a threshold is reached that triggers the alarm.

7. **Process** according to any of claims 1 to 4 **characterized in that** said process includes **an optical mode** wherein:

- signal detection is run on a signal formed by the presence, occurrence, fade-away or absence of a luminous signal contrasting with the rest of the tyre tread;
- by indicators formed of light-coloured materials or materials clearly contrasting with the rest of the tyre tread, such as coloured, white or light-reflective elastomers, for example metal elements, which are inserted, possibly by doping, either during extrusion, during a manufacturing phase downstream of extrusion and upstream of curing, or during a post-manufacturing phase, into the tyre tread at a specific depth corresponding to the desired detection threshold, said indicator inserts wearing down along with the rest of the tyre tread until a threshold is reached that triggers an alarm, or else are placed inside the tyre tread and progressively exposed until giving a perceptible signal until a threshold is reached that triggers the alarm;
- detection being performed by light sensors, such as diodes with localized light source that can be delivered by LEDs mounted on the suspension system, preferably on the camber strut or vehicle frame, or in a more preferable mode in the wingspace, or in an even more preferable mode, on a support strut enabling the sensors to be positioned tightly facing the tyre tread.

8. **Process** according to any of claims 1 to 4 **characterized in that** said process includes:

**an acoustic mode** wherein
the process employs acoustic indicators generating an acoustic signal and **characterized in that** said acoustic indicators can be either inserts or specially-adapted figures or forms to either generate a specific acoustic signal when they enter into contact with the contact surface, said signal disappearing when said specially-adapted figure or form is worn down beyond a pre-determined threshold, or to generate an acoustic signal by contact with the contact surface when, at beyond a pre-determined tyre tread wear threshold, they become sufficiently exposed, said acoustic indicators being integrated into the tyre tread or fitted into a groove or pattern track of the tyre tread or of any wear surface, either at the surface or at a depth designed to make contact with the road surface or any other contact surface once the wear limit has been reached.

9. **Device** for monitoring the state of wear of a tyre or tyre tread according to the process described in any of claims 1 to 8, comprising the following means:

a. at least one tyre tread wear indicator incorporated or fitted in the tyre or the tyre tread

b. said tread wear indicator being adapted to generate a wheel circumference-specific harmonic signal when it appears at the surface due to tyre tread wear, or being adapted to stop generating a wheel circumference-specific harmonic signal when it is worn down with the tyre tread or when it disappears due to tyre tread wear,

c. means of detecting said signal

d. means for processing said signal in order to identify tyre wear, including in particular the extraction of harmonics from said signal

e. means of tread wear identification based on the harmonic component of the signal identified in the previous processing step

10. **Device** according to claim 9 **characterized in that** said indicators are selected from the following list: fine-grain or course-grain particles, agglomerated or not, and inserts of various shapes and dimensions, including specially-adapted figures or forms integrated or fitted in the type tread, whether during or post-manufacture, either mechanically or by doping, said inserts or specially-adapted figures or forms being adapted to generate a specific signal when these indicators appear at the tyre or tyre tread surface.

11. **Device** according to any of the claims 9 to 10 **characterized in that** the insert is placed crossways, i.e. following a given azimuth across the wheel through at least one and preferably several positions on the tyre tread, or generally across the surface of the relevant wear surface or area, and wherein the crossways placement configuration covers 3 positions: one centred, one on the inner sidewall, one on the outer sidewall,

either integrated into the rubber or fitted into a groove or pattern track of the tyre tread, or both, or wherein this crossways placement configuration is repeated along the tyre circumference at a certain number of azimuths selected specially to generate a specific and discriminatable signal or group of signals, such as at 90°, 120°, 145°, 180°, 270° for a first series and other azimuths for every other series, certain azimuths possibly featuring as part of several different series, particularly the first azimuth, and several series of indicator configurations may be fitted along the tyre circumference and/or crossways.

12. **Device** according to any of claims 9 to 11 **characterized in that** the sensors may be mounted on the suspension system or on the vehicle frame or on a support strut enabling the sensors to be positioned facing the tyre tread and

- this support strut is attached to the wheel hub or a component of the suspension system, and is thus interdependent to wheel movements and can, in particular, follow the steering wheels during braking;

- on a support preferably carrying three sensors placed opposite the shoulder or outer sidewall, opposite the contact track, or opposite the shoulder or inner sidewall of the tyre tread.

13. **Device** according to any of claims 9 to 12 **characterized in that** the indicators and the means of detection are produced in a *mechanical mode*

- the signal being formed by the vibrations emitted by mechanical tread indicators built in a tougher material than the tyre tread into which they are inserted;

- detection is therefore, in a preferred embodiment, performed by wheel speed sensors, such as those fitted on anti-lock systems, or by acceleration sensors, or torque or displacement sensors fitted on the wheel, hub, suspension system or vehicle frame.

14. **Device** according to any of claims 9 to 12 **characterized in that** it features *an acoustic mode* wherein:

- emission of the weardown signal is produced by acoustic indicators integrated into the rubber or fitted into a groove or pattern track of the tyre tread and built in a highly-resistant material designed to emit a sound or an acoustic signal when in contact with the road surface, said indicators being inserts or other fitments, or specially-adapted figures or forms.

- signal transmission is air-borne and possibly structure-borne

- signal detection is performed using one or more frequency-range microphones tuned into the indicator signal and fitted either one on each wheel, one on each wheel axle, or one for the whole vehicle, and possibly also at least one support, such as a strut or similar component, and possibly also at least one electrical box, relay or central processing unit whose primary function is to detect the presence of the acoustic signal characteristically indicating that the tyre's wear limit has been reached, and whose secondary function is to identify the wheel(s) emitting said signal.

15. **Device** according to any of claims 9 to 12 **characterized in that** it employs *an electromagnetic mode* wherein:

- the signal is formed by the presence, occurrence, fade-away or absence of emission of an electrical or magnetic field;

- and the device therefore features indicators formed of ferromagnetic materials or materials loaded with ferromagnetic or metallic particles (particularly loaded elastomers), that are integrated into the tyre tread, either during extrusion, during a manufacturing phase downstream of extrusion and upstream of curing, or during a post-manufacturing phase, or produced by doping, either during or after manufacture, said indicator inserts wearing down along with the rest of the tyre tread, wherein their weardown signal fades progressively until a threshold is reached that triggers an alarm, or else are placed inside the tyre tread and progressively exposed until giving a perceptible signal until a threshold is reached that triggers the alarm;

- electrical and/or magnetic field sensors that are mounted on the suspension system or on the vehicle frame.

16. **Device** according to any of claims 9 to 13 **characterized in that** it employs *an optical mode* wherein:

- the signal formed by the presence, occurrence, fade-away or absence of a luminous signal contrasting with the rest of the tyre tread, by

- indicators formed of light-coloured materials or materials clearly contrasting with the rest of the tyre tread, such as coloured, white or light-reflective elastomers, for example metal elements, which are inserted, either during extrusion, during a manufacturing phase downstream of extrusion and upstream of curing, or during a post-manufacturing phase, into the tyre tread, possibly by doping either during or after manufacture, said indicator inserts wearing down along with the rest of the tyre tread until a threshold is reached that triggers an alarm, or else are placed inside the tyre tread and progressively exposed until giving a perceptible signal until a threshold is reached that triggers the alarm;
and

- light sensors, such as diodes, possibly with a localized light source that can be delivered by LEDs mounted on the suspension system or on the vehicle frame, or in an even more preferable mode on a support strut enabling the sensors to be positioned tightly facing the tyre tread.

**Patentansprüche**

1. **Verfahren** zur Überwachung des Verschleißzustands eines Reifens oder eines Laufbands in folgenden 5 Schritten:

f. Ein Schritt zum Einbau von mindestens einer Verschleißanzeige in den Reifen oder das Laufband

g. Die Erzeugung eines spezifischen harmonischen Signals der Radumdrehung durch die genannte Verschleißanzeige; das erwähnte Signal erscheint oder erlischt bei Erreichen eines vorgegebenen Grenzwerts des Verschleißes des Laufbands, das nach Schritt b auftretende Signal hängt von der Anzahl der eingeschalteten Anzeigen, aber auch von ihrem Standort, der Geschwindigkeit des Fahrzeugs und den in dem Reifen eingebauten Anzeigenmerkmalen ab und besteht aus einer Basisfrequenz, die der eigenen Frequenz **fa** der in den Reifen eingebauten Anzeige entspricht, und die durch eine Funktion **F(t)** angepasst wird, die von der Anzahl der Anzeigen, deren Anordnung oder Standort des Einbaus, aber auch der Rotationsgeschwindigkeit des Rads abhängt, diese Funktion **F(t)** ist eine harmonische Funktion der Radumdrehung und zudem vorgegeben, um charakteristisch und sensierbar zu sein und/oder zusätzliche Informationen zu liefern;

h. Die Ortung des genannten Signals

i. Eine Bearbeitung des genannten Signals zur Sensierung des Verschleißes, die u.a. eine Extraktionsphase der Schwingungen des genannten Signals enthält, der Schritt d beinhaltet eine Signalbearbeitungsphase zur gesamten Extraktion A) des Nutzsignals S(t) und beinhaltet die folgenden Schritte B) und C) oder den folgenden Schritt C):

B) Extraktion des Anzeigesignals und/oder
C) Extraktion des Einbausignals, und

aufgrund der Tatsache, dass in Schritt B) eine digitale und analoge Filterung erfolgt, die nur die Signale einbehält, die der (den) eigenen Frequenz(en) der in den Reifen eingebauten Anzeige entspricht und aufgrund der Tatsache, dass in Schritt C) das Einbauschema der Anzeigen im Reifen aufgrund der Radumdrehung ein harmonisches Modulationssignal der Radumdrehung induziert und diese Eigenschaft zur Extraktion des Basissignals der Signale verwendet, die bei harmonischen Frequenzen der Radumdrehung auftreten und den Anzeigen entspricht, die geortet werden sollten, wobei Fi(t) das Modulationssignal ist, welches einem Rad i und einem Grad des Verschleißes, d.h. einem Einbau entspricht, **Si(t)** ist das einem Grad des Verschleißes und einem Rad i entsprechende Signal.

j. Ein letzter Schritt der Sensierung des Grads des Verschleißes, der auf der harmonischen Komponente des Signals beruht, die bei der vorhergehenden Bearbeitung entstanden ist..

2. **Verfahren** gemäß Anspruch 1, **gekennzeichnet dadurch, dass** die genannte Demodulation im Schritt der Extraktion des Einbausignals anhand einer Korrelation zwischen dem Basissignal und dem Modulationssignal, das vom Einbauschema der Anzeigen im Reifen und der Geschwindigkeit des getesteten Rads und/oder Fahrzeugs abhängt, durchgeführt werden kann.

3. **Verfahren** gemäß einem der Ansprüche 1 bis 2, **gekennzeichnet dadurch, dass** es eventuell zusätzliche Verbesserungsschritte enthält:

### Sensierung des beanstandeten Rads:

- In der Kurve und aufgrund eines unterschiedlichen Drehmoments auf den Achsen und selbst auf den Rädern, kann erachtet werden, dass jedes Rad seine eigene Geschwindigkeit besitzt und, die Bestimmung des Rads in einem ausreichend langen Zeitraum durch Beobachtung der Signalphase Si(t) und dem Vergleich mit jeder der Radgeschwindigkeiten möglich ist;

- weiterhin wird, da die Fahrzeuge im Allgemeinen nicht mit genau der selben Geschwindigkeit, insbesondere über lange Zeit hinweg, fahren, die Messung über einen ausreichend langen Zeitraum T1, einige Sekunden bis einige Minuten, durchgeführt, um eine Verwechslung mit einem daneben fahrenden, ähnlichen Fahrzeug zu vermeiden;

- demnach kann nach und nach die Phase des Basissignals mit den die Geschwindigkeit jedes Rads darstellenden Signalen verglichen werden, man nimmt in einem für die letzten Signale bevorzugten Beispiel die Signale der Radgeschwindigkeit, die von den Sensoren der Antiblockiervorrichtung des Rads geliefert wurden.

- Daraus kann gefolgert werden, dass das Rad oder die Räder, bei denen erkannt wurde, dass sie die Verschleißgrenze erreicht haben, tatsächlich ein oder die Räder unseres Fahrzeugs sind und welches oder welche.

4. **Verfahren** gemäß einem der Ansprüche 1 bis 3, **gekennzeichnet dadurch, dass** es einen Schritt der Extraktion von finalen Informationen enthält, gemäß dem jeder der Werte von Di(t) und Si(t) mit den einzelnen Grenzwerten Sli verglichen wird; und eventuell

- **dadurch**, dass diese Grenzwerte Sli durch Kenntnis der Außentemperatur oder durch die durchschnittliche Fahrtgeschwindigkeit des Fahrzeugs gewichtet werden können.

- diese Tests werden von Zählern verfolgt, die sich entsprechend den Testergebnissen erhöhen oder mindern, sobald ein Zähler Cpti den vorgegebenen Grenzwert überschreitet, obwohl bekannt ist, dass das entsprechende Rad die jeweilige Verschleißgrenze erreicht hat. Di(t) ist folgendermaßen definiert: $Di(t) = \int_{x=t-T1}^{x=t} Si(x)dx$.

5. **Verfahren** gemäß einem der Ansprüche 1 bis 4 **gekennzeichnet dadurch, dass** es eine mechanische Betriebsart enthält
und dass:

### *in der mechanischen Betriebsart*

- man das Signal ortet, das durch die von den mechanischen Anzeigen ausgesandten Vibrationen entsteht, wobei erstere aus einem härteren Material als das Laufband des Reifens bestehen und in letzteres eingebaut sind; diese entstehen an der Oberfläche des Reifens, sobald der Grad des Verschleißes entsprechend dem Stelle der Ortung erreicht ist und die somit eine lokalisierte Abweichung des Reifenradius und somit Abweichungen der Kreisfrequenz des Reifens, des Rads und der Nabe und der Vibrationen des Reifens, des Rads, der Nabe und der Bodenverbindung schaffen;

- die Ortung wird also bestenfalls mit den Sensoren der Radgeschwindigkeit durchgeführt, z.B. denen der Antiblockiervorrichtungen der Räder oder den Sensoren für Beschleunigung oder Kraftmessung oder Bewegung, die am Rad oder an der Nabe, der Bodenverbindung oder dem Fahrgestell angebracht sind.

6. **Verfahren gemäß** einem der Ansprüche 1 bis 4, **gekennzeichnet dadurch, dass** es *eine elektromagnetische*

*Betriebsart* enthält, bei der

- man ein Signal spürt, das durch die Gegenwart, das Erscheinen, die Minderung oder die Abwesenheit von Anzeigen entsteht, die ein magnetisches oder elektrisches Feld aussenden oder verändern, und
- Anzeigen, die aus ferromagnetischen, metallischen oder mit ferromagnetischen oder metallischen Partikeln geladenen Werkstoffen bestehen, insbesondere geladene Elastomere werden eventuell durch Doping bei der Extrusion oder in einer Herstellungsphase, die sich zwischen der Extrusion und dem Brennen oder nach der Herstellung befindet, eingebaut, und zwar in das Laufband mit einer bestimmten Tiefe, die dem gewünschten Ortungsgrenzwert entspricht und die mit dem Rest des Laufbands verschlissen werden, und man ortet ihr Signal, das nach und nach schwächer wird, bis bei einem Grenzwert ein Alarmsignal ausgelöst wird, oder die in das Laufband eingebaut sind und nach und nach auftreten und man ortet ihr Signal, das bis zu einem Grenzwert, der das Alarmsignal auslöst, wahrnehmbar ist.

7. **Verfahren** gemäß einem der Ansprüche 1 bis 4, **gekennzeichnet dadurch, dass** es *eine optische Betriebsart* enthält, bei der

- man das Signal ortet, das durch die Gegenwart, das Erscheinen, die Minderung oder die Abwesenheit eines Lichtsignals entsteht, das mit dem Rest des Laufbands kontrastiert;
- durch Anzeigen, die aus hellen Werkstoffen bestehen oder die deutlich mit dem Rest des Laufbands kontrastieren, wie z.B. farbige oder weiße Elastomere oder die Licht widerspiegeln, wie z.B. Metallelemente, die eventuell durch Doping bei der Extrusion oder in einer Herstellungsphase, die sich zwischen der Extrusion und dem Brennen oder nach der Herstellung befindet und die mit einer bestimmten Tiefe, die dem gewünschten Ortungsgrenzwert entspricht, in das Laufband eingebaut werden und die mit dem Rest des Laufbands bis zu einem Grenzwert verschleißen, an dem ein Alarmsignal ausgelöst wird, oder die in die Masse des Laufbands eingebaut sind und nach und nach auftreten, wobei ihr Signal bis zu einem Grenzwert wahrnehmbar ist, an dem ein Alarmsignal ausgelöst wird.
- nach Ortung durch Lichtsensoren, z.B. Dioden mit einer Punktbeleuchtung, die durch Leuchtdioden erfolgen kann, die in der Bodenverbindung und bestenfalls an der Stützstrebe oder dem Fahrgestell befestigt sind, bestenfalls unterhalb des Flügels oder in der bevorzugten Art und Weise an einem Stützarm, der die Positionierung der Sensoren vor oder in Nähe des Laufbands ermöglicht.

8. **Verfahren** gemäß einem der Ansprüche 1 bis 4, **gekennzeichnet dadurch, dass** es *eine akustische Betriebsart* enthält, bei der akustische Anzeiger eingesetzt werden, die ein akustisches Signal erzeugen und **dadurch**, dass diese akustischen Anzeiger entweder Einsätze oder geeignete geometrische Formen oder Skulpturen sein können, um entweder bei Kontakt mit der Kontaktoberfläche ein spezifisches akustisches Signal zu erzeugen, welches erlischt, sobald die genannte Form oder Skulptur ab einem vorgegebenen Grenzwert verschlissen ist oder durch ihren Kontakt mit der Kontaktfläche ein akustisches Signal erzeugen, sobald ein vorgegebener Grenzwert des Reifens überschritten ist, diese sind ausreichend wahrnehmbar, da die akustischen Anzeigen in der Masse oder in einer Furche, Rille usw. des Laufbands des Reifens oder jeder Verschleißzone oder -Oberfläche, oder an der Oberfläche oder mit einer geeigneten Tiefe eingebaut sind, so dass sie mit dem Boden oder der Kontaktfläche in Kontakt treten, sobald der Verschleißgrenzwert erreicht ist.

9. **Vorrichtung** zur Überwachung des Verschleißzustands eines Reifens oder eines Laufbands gemäß dem in einem der Ansprüche 1 bis 8 beschriebenen Verfahren unter Berücksichtigung der folgenden Mittel:

f. mindestens eine in den Reifen oder das Laufband eingebaute oder implantierte Verschleißanzeige
g. die genannte Verschleißanzeige muss geeignet sein, um ein spezifisches harmonisches Signal der Radumdrehung zu erzeugen, wenn diese aufgrund des Verschleißes des Laufbands an der Oberfläche erscheint, oder muss geeignet sein, die Erzeugung eines harmonischen Signals der Radumdrehung abzustellen, sobald diese mit dem Laufband verschlissen ist oder aufgrund dieser Tatsache erlischt (cf. avant),
h. ein Mittel zur Ortung des genannten Signals
i. ein Mittel zur Bearbeitung des genannten Signals zur Sensierung des Verschleißes , das u.a. eine Extraktionsphase der Schwingungen des genannten Signals enthält
j. ein Mittel zur Sensierung des Grads des Verschleißes, der auf der harmonischen Komponente des Signals beruht, die bei der vorhergehenden Bearbeitung entstanden ist

10. **Vorrichtung** gemäß Anspruch 9, **gekennzeichnet dadurch, dass** die genannten Anzeigen unter Folgenden ausgewählt werden: feinen oder groben, verdichteten oder nicht verdichteten Partikeln und Einsätze in verschiedenen Abmessungen und Formen, einschließlich von bei der Herstellung oder später mechanisch oder durch Doping in oder auf den Reifen eingebaute Formen oder Skulpturen, Einsätze, geometrische Formen oder Skulpturen, die dazu geeignet sind ein spezifisches Signal zu erzeugen, wenn diese Anzeigen an der Oberfläche des Reifens oder des Laufbands auftreten.

11. **Vorrichtung** gemäß einem der Ansprüche 9 bis 10, **gekennzeichnet dadurch, dass** der Einbau quer erfolgt ist, d.h. gemäß einem Radwinkel, der an mindestens einer und vorzugsweise mehreren Stellen des Laufbands oder allgemein an der jeweiligen Oberfläche oder Verschleißzone vorgegeben ist, und dass insbesondere ein Quereinbau an 3 Stellen vorgenommen wird: zentriert, an der Innenseite, an der Außenseite oder in der Gummimasse oder einer Furche oder Rille des Reifens oder beides oder

so, dass dieser Quereinbau längsseitig an einer bestimmten Anzahl der Winkel wiederholt wird, deren Anzahl geeignet ist, um ein Signal oder Gruppen von Signalen zu erzeugen, die charakteristisch und sensierbar sind, z.B. 90, 120, 145, 180, 270° als erste Serie und weitere Winkel für jede weitere Serie, bestimmte Winkel können in mehreren Serien enthalten sein, insbesondere der erste Winkel, und es können quer und/oder entsprechend den Niveaus mehrere längsseitige Einbauserien von Anzeigen geplant werden.

12. **Vorrichtung** gemäß einem der Ansprüche 9 bis 11, **gekennzeichnet dadurch, dass** die Sensoren in der Bodenverbindung oder auf dem Fahrgestell oder auf einer Halterung, die es ermöglicht, sie vor dem Laufband zu positionieren, angebracht werden und

- diese Halterung an der Radnabe oder an einem Element der Bodenverbindung befestigt wird und somit den Radbewegungen folgt und insbesondere den Steuerrädern beim Wenden folgen kann;
- auf einer Halterung mit vorzugsweise drei Sensoren, die jeweils gegenüber der Schulter oder der Innenseite, in der Mitte und Schulter oder an der Innenseite des Laufbands des Reifens angebracht sind.

13. **Vorrichtung** gemäß einem der Ansprüche 9 bis 12, **gekennzeichnet dadurch, dass** die Anzeigen und die Sensierung gemäß einer *mechanischen Betriebsart* durchgeführt werden

- das durch die Vibrationen der mechanischen Anzeigen erzeugte Signal, wobei die Anzeigen aus einem härteren Material als das Laufband des Reifens bestehen und in dieses eingebaut sind;
- die Ortung wird vorzugsweise mit den Sensoren der Radgeschwindigkeit durchgeführt, z.B. denen der Antiblockiervorrichtungen der Räder oder den Sensoren für Beschleunigung oder Kraftmessung oder Bewegung, die am Rad oder an der Nabe, der Bodenverbindung oder dem Fahrgestell angebracht sind.

14. **Vorrichtung** gemäß einem der Ansprüche 9 bis 12, **gekennzeichnet dadurch, dass** es eine akustische Betriebsart enthält, bei der

- die Aussendung des Verschleißsignals durch akustische Anzeigen erfolgt, die in der Masse und/oder einer Rille oder Furche des Reifens eingebaut, sind und aus einem harten Material bestehen, dessen Funktion die Aussendung eines Tons oder akustischen Signals bei Kontakt mit dem Boden ist. Diese können entweder aus Einsätzen oder anderen Teilen oder geeigneten geometrischen Formen oder Skulpturen bestehen.
- die Übertragung erfolgt auf dem Luftweg oder eventuell über den Boden
- die Ortung erfolgt mithilfe eines Mikrofons oder mehrerer Mikrofone mit zentrierter Bandbreite auf dem Signal, die in jedem Rad oder jeder Achse oder für das gesamte Fahrzeug eingebaut sind, und eventuell mindestens einer Halterung, wie z.B. ein Arm oder ähnliches und eventuell mindestens einem Gehäuse oder elektronischem Relais oder zentralem Rechner, dessen wesentliche Funktion in der Ortung der Gegenwart des charakteristischen akustischen Signals bei Erreichen des Verschleißgrenzwerts des Reifens besteht und dessen zweite Funktion darin besteht, das Rad oder die Räder zu identifizieren, die dieses Signal aussenden.

15. **Vorrichtung** gemäß einem der Ansprüche 9 bis 12, **gekennzeichnet dadurch, dass** es eine elektromagnetische Betriebsart verwendet, bei der

- das Signal durch die Gegenwart, das Erscheinen, die Minderung oder die Abwesenheit des Aussendens eines magnetischen oder elektrischen Feldes entsteht;
- und die Vorrichtung zu diesem Zweck Anzeigen enthält, die aus ferromagnetischen oder mit ferromagnetischen oder metallischen Partikeln geladenen Werkstoffen bestehen, (insbesondere geladene Elastomere), die bei der Extrusion oder in einer Herstellungsphase, die sich zwischen der Extrusion und dem Brennen oder nach der Herstellung befindet, eingebaut werden, oder durch Doping entstehen, und zwar bei der Herstellung oder später und die mit dem Rest des Laufbands verschlissen werden, und ihr Signal wird nach und nach schwächer, bis bei einem Grenzwert ein Alarmsignal ausgelöst wird, oder die in das Laufband eingebaut sind und nach und nach auftreten, wobei ihr Signal bis zu einem Grenzwert wahrnehmbar ist, an dem ein Alarmsignal ausgelöst wird ;

- die Sensoren des magnetischen und/oder elektrischen Feldes sind in die Bodenverbindung oder das Fahrgestell eingebaut.

16.  **Vorrichtung** gemäß einem der Ansprüche 9 bis 13, **gekennzeichnet dadurch, dass** es eine *optische Betriebsart* verwendet, bei der

- das Signal durch die Gegenwart, das Erscheinen, die Minderung oder die Abwesenheit eines Lichtsignals entsteht, das mit dem Rest des Laufbands kontrastiert, durch
- Anzeigen, die aus hellen Werkstoffen bestehen oder die deutlich mit dem Rest des Laufbands kontrastieren, wie z.B. farbige oder weiße oder Licht widerspiegelnde Elastomere, wie z.B. Metallelemente, die bei der Extrusion oder in einer Herstellungsphase, die sich zwischen der Extrusion und dem Brennen oder nach der Herstellung befindet und eventuell durch Doping während der Herstellung oder später entsteht, in das Laufband eingebaut sind, und die mit dem Rest des Laufbands bis zu einem Grenzwert verschleißen, an dem ein Alarm ausgelöst wird, oder die im Laufband eingebaut sind und nach und nach auftreten, wobei ihr Signal bis zu einem Grenzwert wahrnehmbar ist, an dem ein Alarmsignal ausgelöst wird;
und
- Lichtsensoren, z.B. Dioden mit einer eventuellen Punktbeleuchtung, die z.B. durch Leuchtdioden erfolgt, die in der Bodenverbindung oder auf dem Fahrgestell oder bestenfalls an einem Stützarm angebracht sind, wodurch diese Sensoren vor und in Nähe des Laufbands positioniert werden können.

T

Figure 1 A

G

M

B

Figure 1 B

Figure 1

**Figure 2 A**

**Figure 2 B**

## Figure 2

Signal de base          Vroue(t)          Description
                                         implantation
                                           témoins

Extraction du    Sb(t)    ┌─────────────────┐
signal utile              │ Création fonction │◄────────┘
                          │    modulante      │
                          └─────────────────┘
                                   │ Fi(t)
        │                          │
        ▼                          ▼
┌──────────────────────────────────────┐
│     Extraction du signal témoin        │
│     Extraction d'implantation          │
└──────────────────────────────────────┘
                    │ Si(t)
─ · ─ · ─ · ─ · ─ · ▼ ─ · ─ · ─ · ─ · ─ ·

Information usure    ┌──────────────┐
instantanée          │  Intégration  │
                     │  temporelle   │
                     └──────────────┘
                            │ Di(t)
─ · ─ · ─ · ─ · ─ · ─ · ─ · ▼ ─ · ─ · ─ · ─ ·
                     ┌──────────────┐
                     │   Seuillage   │◄──────  Sli
                     └──────────────┘
                            │
Extraction de        ┌──────────────┐
l'information         │   Comptage    │
finale               └──────────────┘
                            │ Cpti
                            ▼
                      Information
                        finale

## Figure 3

**Figure 4**

**Figure 5**

C

SC

## Figure 6

**EP 1 337 404 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 3929179 A